# EUROPEAN PATENT APPLICATION

(11) **EP 1 841 179 A1**
(43) Date of publication of application: **03.10.2007**
(21) Application number: 06711523.8
(22) Date of filing: 11.01.2006
(51) Int. Cl.: H04L 29/08, H04L 12/56

(54) **COMMUNICATION SYSTEM, INFORMATION PROCESSING DEVICE, SERVER, INFORMATION PROCESSING METHOD, PROGRAM FOR EXECUTING THE INFORMATION PROCESSING METHOD, AND RECORDING MEDIUM CONTAINING THE PROGRAM**

(30) Priority: 21.01.2005 JP 2005013626
(71) Applicant: MATSUSHITA ELECTRIC INDUSTRIAL CO., LTD., Osaka 571-8501 (JP)
(72) Inventor: GOBARA, Kunio, matsushita Electric Industrial Co.,Ltd., Osaka-shi, Osaka 540-6207 (JP); MAEKAWA, Hajime, matsushita Electric Industrial Co.,Ltd., Osaka-shi, Osaka 540-6207 (JP)
(74) Representative: Grünecker, Kinkeldey, Stockmair & Schwanhäusser Anwaltssozietät
(86) International application number: PCT/JP2006/300174
(87) International publication number: WO 2006/077754

(57) **Abstract**

Disclosed is a communication system wherein, in a case wherein peer-to-peer communication channels are established between data processing apparatuses using a plurality of passing-via-NAT methods, a channel employed for communication between the apparatuses can be quickly selected, and peer-to-peer communication can be performed via the selected channel. This communication system includes first and second data processing apparatuses, so that at the least, either the first or the second data processing apparatus performs communication via a communication processing apparatus, and two or more peer-to-peer communication channels are established between the first and second data processing apparatuses. At the least, either the first data processing apparatus, or the second data processing apparatus, selects a channel to be employed for communication between the first and second data processing apparatuses, and communicates along the selected channel.

## Description

### <Technical Field>

The present invention relates to a communication system that performs peer-to-peer communication, a data processing apparatus, a server, a data processing method, a program that executes the data processing method, and a recording medium on which the program is recorded.

### <Background Art>

Conventionally, peer-to-peer (hereinafter also referred to as P2P) communication, which is communication performed not via a server, is performed between two data processing apparatuses. In this case, a so-called passing-via-NAT system is required, to establish P2P communication, in a case wherein two data processing apparatuses, which perform P2P communication, are currently communicating with each other via a communication processing apparatus, such as a router, that has a network address translation (hereinafter referred to as a NAT) function, a technique that performs conversion between a private Internet protocol address (hereinafter, an Internet protocol is referred to as an IP) and a global IP address, so that a node, to which only a local IP address is allocated, can access the internet directly.

Conventionally, passing-via-NAT is performed when a user manually sets the NAT However, there is a case wherein it might not be easy for a common user to set the NAT, and automation of the NAT setting has been demanded. As example, as well known systems for automatically setting up the passing-via-NAT, one method uses a NAT passing technique (Simple Traversal of User Datagram Protocol Through Network Address Translators: hereinafter referred to as STUN), another uses a method using Universal Plug and Play (hereinafter referred to as UpnP) and another uses a mutual connection establishment method disclosed in JP-A-2004-180003.

It should be noted that the method that uses STUN is disclosed, for example, in "STUN - Simple Traversal of User Datagram Protocol (UDP) Through Network Address Translators (NATs)", J. Rosenberg, J. Weinberger, C. Huitema and R. Mahy, [online], March 2003, Network Working Group Request for Comments: 3489, [Searched on October 7, 2004], Internet <URL: http://www.ietf.org/rfc/rfc3489.txt>.

However, even by using the above method, not all NATs are compatible with all passing-via-NAT methods, and there can be a case wherein a system can not be passed through the NAT That is, one passing-via-NAT method is not sufficient. Therefore, a communication system for sequentially performing a plurality of methods has been commercially produced. However, a conventional communication system, which sequentially performs a plurality of passing-via-NAT methods, determines whether the first method is available, and then examines the second method, so that it takes too much time for a channel to be established. When the number of methods is increased, a problem is that more time is required for a channel that is to be established.

### <Disclosure of the Invention>

The present invention provides a communication system wherein, in a case wherein P2P communication channels are established between data processing apparatuses using a plurality of passing-via-NAT methods, a channel employed for communication between the apparatuses can be quickly selected, and P2P communication can be performed via the selected channel, a data processing apparatus, a server, a data processing method, a program that executes the data processing method, and a recording medium on which the program is recorded.

A communication system according to the present invention includes a first data processing apparatus and a second data processing apparatus. At the least, either the first data processing apparatus or the second data processing apparatus performs communication via a communication processing apparatus. In a case wherein two or more peer-to-peer communication channels are established between the first data processing apparatus and the second data processing apparatus, at the least, either the first data processing apparatus, or the second data processing apparatus, selects a channel to be employed for communication between the first data processing apparatus and the second data processing apparatus, and communicates along the selected channel. Therefore, in a case wherein the P2P communication channel is established between the first data processing apparatus and the second data processing apparatus using a plurality of passing-via-NAT methods, the channel used for communication between the apparatuses can be quickly selected, and P2P communication can be performed along the selected channel.

Further, in the communication system according to the present invention, the first data processing apparatus may include a selector, a first communication unit and a selection results data transmitter, and the second data processing apparatus may include a selection results data receiver and a second communication unit. The selector selects, from among the two or more P2P communication channels that have been established, a channel to be used for communication with the second data processing apparatus. The first communication unit communicates with the second data processing apparatus along the channel selected by the selector. The selection results data transmitter transmits, to the second data processing apparatus, selection results data that is information indicating selection results obtained by the selector. The selection results data receiver receives the selection results data. The second communication unit employs the selection results data received by the selection results data receiver, and communicates with the first data processing apparatus along the channel selected by the selector.

According to this, selection of a channel can be performed by the first data processing apparatus, and the selection results can be transmitted by the first data processing apparatus to the second data processing apparatus. As a result, the first data processing apparatus and the second data processing apparatus can perform P2P communication along the selected channel.

Furthermore, in the communication system of the present invention, the first data processing apparatus may include a first selector and a first communication unit, and the second data processing apparatus may include a second selector and a second communication unit. The first selector selects, from among the two or more peer-to-peer communication channels that have been established, a channel to be used for communication with the second data processing apparatus. The first communication unit communicates with the second data processing apparatus along the channel selected by the first selector. The second selector employs the same algorithm as used by the first selector, and selects, from among the two or more peer-to-peer communication channels that have been established, a channel to be used for communication with the first data processing apparatus. The second communication unit communicates with the first data processing apparatus along the channel selected by the second selector.

According to this, the first data processing apparatus and the second processing apparatus can select a channel, and can perform P2P communication between their apparatus along the selected channel. In this case, since the individual data processing apparatuses perform the selection, transmission and reception of the selection results will not be required between the first data processing apparatus and the second data processing apparatus.

Moreover, a communication system according to the present invention may include a first data processing apparatus, a second processing apparatus and additional equipment, and either the first data processing apparatus or the second data processing apparatus may communicate via a communication apparatus. In a case wherein two or more peer-to-peer communication channels are established between the first data processing apparatus and the second data processing apparatus, at the least, either the first data processing apparatus, the second data processing apparatus or the additional equipment may select a channel used for communication between the first data processing apparatus and the second data processing apparatus, so that communication can be performed along the selected channel. According to this, in a case wherein P2P communication channels are established between the first data processing apparatus and the second data processing apparatus by employing a plurality of passing-via-NAT methods, a channel used for communication between these apparatuses can be quickly selected, and P2P communication can be performed along the selected channel.

In addition, in the communication system of the present invention, the additional equipment may be a server; the first data processing apparatus may include a first communication unit and a selection results data transmitter; the server may include a receiver and a transmitter; and the second data processing apparatus may include a selection results data receiver and a second communication unit. The selector selects, from among the two or more peer-to-peer communication channels that have been established, a channel to be used for communication with the second data processing apparatus.

The first communication unit communicates with the second data processing apparatus along the channel selected by the selector. The selection results data transmitter transmits, to the server, selection results data, which is information indicating selection results obtained by the selector. The receiver receives the selection results data. The transmitter transmits, to the second data processing apparatus, the selection results data received by the receiver. The selection results data receiver receives the selection results data transmitted by the server. The second communication unit employs the selection results data received by the selection results data receiver, and communicates with the first data processing apparatus along the channel selected by the selector.

According to this, selection of a channel can be performed by the first data processing apparatus, and the selection results can be transmitted by the first data processing apparatus, via the server, to the second data processing apparatus. As a result, the first data processing apparatus and the second data processing apparatus can perform P2P communication along the selected channel.

Also, in the communication system of the present invention, the additional equipment may be a server; the first data processing apparatus may include a selection request data transmitter, a first selection results data receiver and a first communication unit; the second data processing apparatus may include a second selection results data receiver and a second communication unit; and the server may include a receiver, a selector and a transmitter. The selection request data transmitter transmits, to the server, selection request data, which is information for requesting that a channel used to communicate with the second data processing apparatus be selected from among the two or more peer-to-peer communication channels that have been established.

The first selection results data receiver receives selection results data, which is information indicating selection results obtained by the server. The first communication unit employs the selection results data received by the first selection results data receiver, and communicates with the second data processing apparatus along the channel selected by the server. The second selection results data receiver receives selection results data. The second communication unit employs the selection results data received by the second selection results data receiver, and communicates with the first data processing apparatus along the channel selected by the server. The receiver receives the selection request data.

In accordance with the selection request data, the selector selects, from among the two or more peer-to-peer communication channels that have been established, a channel to be used for communication between the first data processing apparatus and the second data processing apparatus. The transmitter transmits, to the first data processing apparatus and the second data processing apparatus, the selection results data, which is information indicating the selection results obtained by the selector.

According to this, the selection of a channel can be performed by the server, and the selection results can be transmitted by the server to the first data processing apparatus and the second data processing apparatus. As a result, the first data processing apparatus and the second processing apparatus can perform P2P communication along the selected channel.

Further, in the communication system of this invention, the additional equipment may be a server; the first data processing apparatus may include a selection request data transmitter, a first selection results data receiver, a first communication unit and a selection results data transmitter; the second data processing apparatus may include a second selection results data receiver and a second communication unit; and the server may include a receiver, a selector and a transmitter. The selection request data transmitter transmits, to the server, selection request data, which is information for requesting that a channel to be used to communicate with the second data processing apparatus be selected from among the two or more peer-to-peer communication channels that have been established.

The first selection results data receiver receives selection results data, which is information indicating selection results obtained by the server. The first communication unit employs the selection results received by the first selection results data receiver, and communicates with the second data processing apparatus along the channel selected by the server. The selection results data transmitter transmits the selection results data to the second data processing apparatus. The second selection results data receiver receives the selection results data. The second communication unit employs the selection results data received by the second selection results data receiver, and communicates with the first data processing apparatus along the channel selected by the server.

The receiver receives the selection request data. In accordance with the selection request data, the selector selects, from among the two or more peer-to-peer communication channels that have been established, a channel to be used for communication between the first data processing apparatus and the second processing apparatus. The transmitter transmits, to the first data processing apparatus, the selection results data, which is information indicating the selection results obtained by the selector.

According to this, the selection of a channel can be performed by the server, and the selection results can be transmitted by the server to the first data processing apparatus. And the selection results can be transmitted from the first data processing apparatus to the second data processing apparatus. As a result, the first data processing apparatus and the second data processing apparatus can perform P2P communication along the selected channel.

Furthermore, in the communication system of this invention, the additional equipment may include a first server and a second server; the first data processing apparatus may include a selection request data transmitter, a first selection results data receiver, a first communication unit and a selection results data transmitter; the second data processing apparatus may include a second selection results data receiver and a second communication unit; the first server may include a first receiver, a selector and a first transmitter; and the second server may include a second receiver and a second transmitter. The selection request information transmitter transmits, to the first server, selection request data, which is information for requesting that a channel to be used for communication with the second data processing apparatus be selected from among the two or more peer-to-peer communication channels that have been established.

The first selection results data receiver receives selection results data, which is information indicating selection results obtained by the first server. The first communication unit employs the selection results data received by the first selection results data receiver, and communicates with the second data processing apparatus along the channel selected by the first server. The selection results data transmitter transmits the selection results data to the second server. The second selection results data receiver receives the selection results data transmitted by the second server. The second communication unit employs the selection results data received by the second selection results data receiver, and communicates with the first data processing apparatus along the channel selected by the first server.

The first receiver receives the selection request data. In accordance with the selection request information, the selector selects, from among the two or more peer-to-peer communication channels that have been established, a channel to be employed for communication between the first data processing apparatus and the second data processing apparatus. The first transmitter transmits, to the first data processing apparatus, the selection results data, which is information indicating the selection results obtained by the selector. The second receiver receives the selection results data. The second transmitter transmits, to the second data processing apparatus, the selection results data received by the second receiver.

According to this, the first server can perform the selection of a channel, and can transmit the selection results to the first data processing apparatus. And the first data processing apparatus can transmit the selection results via the second server to the second data processing apparatus. As a result, the first data processing apparatus and the second processing apparatus can perform P2P communication along the selected channel.

In addition, in the communication system of this invention, the additional equipment may be a server; the first data processing apparatus may include a selection request data transmitter, a first selection results data receiver and a first communication unit; the second data processing apparatus may include a second selection results data receiver, a second communication unit and a selection results data transmitter; and the server may include a receiver, a selector and a transmitter. The selection request data transmitter transmits, to the server, selection request data, which is information for requesting that a channel to be used for communication with the second data processing apparatus be selected from among the two or more peer-to-peer communication channels that are established.

The first selection results data receiver receives the selection results data that is information transmitted by the second data processing apparatus, indicating selection results obtained by the server. The first communication unit employs the selection results data received by the first selection results data receiver, and communicates with the second data processing apparatus along the channel selected by the server. The second selection results data receiver receives the selection results data transmitted by the server. The second communication unit employs the selection results data received by the second selection results data receiver, and communicates with the first data processing apparatus along the channel selected by the server.

The selection results data transmitter transmits, to the first data processing apparatus, the selection results data received by the second selection results data receiver. The receiver receives the selection request data. In accordance with the selection request data, the selector selects, from among the two or more peer-to-peer communication channels that have been established, a channel to be used for communication between the first data processing apparatus and the second data processing apparatus. The transmitter transmits, to the second data processing apparatus, the selection results data, which is information indicating the selection results obtained by the selector.

According to this, the selection of a channel can be performed by the server, and the selection results can be transmitted by the server to the second data processing apparatus. And the selection results can be transmitted by the second data processing apparatus to the first data processing apparatus. As a result, the first data processing apparatus and the second data processing apparatus can perform P2P communication along the selected channel.

Moreover, in the communication system of the present invention, the additional equipment may include a first server and a second server; the first data processing apparatus may include a selection request data transmitter, a first selection results data receiver and a first communication unit; the second data processing apparatus may include a second selection results data receiver, a second communication unit and a selection results data transmitter; the first sever may include a first receiver, a selector and a first transmitter; and the second server may include a second receiver and a second transmitter. The selection request data transmitter transmits, to the first server, selection request data, which is information for requesting that a channel to be used for communication with the second data processing apparatus be selected from among the two or more peer-to-peer communication channels that have been established.

The first selection results data receiver receives selection results data, which is information transmitted by the second server, indicating the selection results obtained by the first server. The first communication unit employs the selection results data received by the first selection results data receiver, and communicates with the second data processing apparatus along the channel selected by the first server. The second selection results data receiver receives the selection results data transmitted by the first server. The second communication unit employs the selection results data received by the second selection results data receiver, and communicates with the first data processing apparatus along the channel selected by the first server. The selection results data transmitter transmits, to the second server, the selection results data received by the second selection results data receiver.

The first receiver receives the selection results data. In accordance with the selection request data, the selector selects, from among the two or more peer-to-peer communication channels that have been established, a channel to be used for communication between the first data processing apparatus and the second data processing apparatus. The first transmitter transmits, to the second data processing apparatus, selection results data, which is information indicating selection results obtained by the selector. The second receiver receives the selection results data. The second transmitter transmits, to the first data processing apparatus, the selection results data received by the second receiver.

According to this, the selection of a channel can be performed by the first server, and the selection results can be transmitted by the first server to the second data processing apparatus. And the selection results can be transmitted by the second data processing apparatus via the second server to the first data processing apparatus. As a result, the first data processing apparatus and the second data processing apparatus can perform P2P communication along the selected channel.

Also, in the communication system of this invention, the additional equipment may be a server; the first data processing apparatus may include a first selection request data transmitter, a first selection results data receiver and a first communication unit; the second data processing apparatus may include a second selection request data transmitter, a second selection results data receiver and a second communication unit; and the server may include a receiver, a selector and a transmitter. The first selection request data transmitter transmits, to the server, selection request data that is information for requesting that a channel to be used for communication with the second data processing apparatus be selected from among the two or more peer-to-peer communication channels that have been established.

The first selection results data receiver receives selection results data, which is information indicating selection results obtained by the server. The first communication unit employs the selection results data obtained by the first selection results data receiver, and communicates with the second data processing apparatus along the channel selected by the server. The second selection request data transmitter transmits the selection request data. The second selection results data receiver receives the selection results data. The second communication unit employs the selection results data received by the second selection results data receiver, and communicates with the first data processing apparatus along the channel selected by the server.

The receiver receives the selection request data. In accordance with the selection request data, the selector selects, from among the two or more peer-to-peer communication channels that have been established, a channel to be used for communication between the first data processing apparatus and the second data processing apparatus. The transmitter transmits, to a data processing apparatus that transmitted the selection request data, the selection results data, which is information indicating the selection results obtained by the selector.

According to this, selection of a channel can be performed by the server, and the selection results can be transmitted by the server to the first data processing apparatus and the second data processing apparatus. As a result, the first data processing apparatus and the second data processing apparatus can perform P2P communication along the selected channel. Furthermore, in the communication system of this invention, of the two or more peer-to-peer communication channels that have been established, channels that are not selected by the selector may be closed.

According to this, in a case wherein a process for monitoring a port, for example, is performed in order to maintain the P2P communication channel, the channel need only be closed in order to reduce the processing load. Further, in a case wherein, for example, an unauthorized access might externally be gained to the data processing apparatus because a P2P communication channel is maintained open, the channel need only be closed to prevent such unauthorized access.

### <Brief Description of the Drawings>

Fig. 1 is a diagram showing the configuration of a first data processing apparatus, a second data processing apparatus and a communication system according to a first embodiment of the present invention.
Fig. 2 is a flowchart showing the operation of the first data processing apparatus of this embodiment.
Fig. 3 is a flowchart showing the operation of the second data processing apparatus of this embodiment.
Fig. 4 is a flowchart for explaining a method of this embodiment for establishing P2P communication using UPnP.
Fig. 5 is a diagram showing an example of correlations for apparatus identification information, IP addresses and port numbers according to the embodiment.
Fig. 6 is a diagram showing the configuration for a first data processing apparatus, a second data processing apparatus and a communication system according to a second embodiment of the present invention. [Fig. 7] Fig. 7 is a flowchart showing the operation of a server of this embodiment.
Fig. 8 is a diagram showing the configuration of a first data processing apparatus, a second data processing apparatus and a communication system according to a third embodiment of the present invention. [Fig. 9] Fig. 9 is a flowchart showing the operations of the first and second data processing apparatuses of this embodiment.
Fig. 10 is a diagram showing the configuration of a first data processing apparatus, a second data processing apparatus, a server and a communication system according to a fourth embodiment of the present invention.
Fig. 11 is a diagram showing an example of correlations between identifiers and P2P communication channels of this embodiment.
Fig. 12 is a flowchart showing the operation of the first data processing apparatus of this embodiment.
Fig. 13 is a flowchart showing the operation of the server of this embodiment.
Fig. 14 is a diagram showing the configuration of a first data processing apparatus, a second data processing apparatus, a server and a communication system according to a fifth embodiment of the present invention.
Fig. 15 is a flowchart showing the operation of the first data processing apparatus of this embodiment.
Fig. 16 is a diagram showing the configuration of a first data processing apparatus, a second data processing apparatus, a first server and a communication system according to a sixth embodiment of the present invention.
Fig. 17 is a diagram showing the configuration of a first data processing apparatus, a second data processing apparatus, a server and a communication system according to a seventh embodiment of the present invention.
Fig. 18 is a flowchart showing the operation of the second data processing apparatus of this embodiment.
Fig. 19 is a diagram showing the configuration of a first data processing apparatus, a second data processing apparatus, a first server and a communication system according to an eighth embodiment of the present invention.
Fig. 20 is a diagram showing the configuration of a first data processing apparatus, a second data processing apparatus, a server and a communication system according to a ninth embodiment of the present invention.

### <Description of Reference Numerals and Signs>

- 1 a, 1b, 1c, 1d, 1e, 1f, 1i:: first data processing apparatus
- 2a, 2c, 2d, 2g, 2h, 2i:: second data processing apparatus
- 3:: first communication processing apparatus
- 4:: second communication processing apparatus
- 5:: P2P server
- 6, 7d, 7e, 7g, 7i:: server
- 7f, 7h:: first server
- 8f, 8h:: second server
- 11, 72:: selector
- 11c:: first selector
- 12, 14, 17, 18, 25, 26:: selection results data transmitter
- 13:: first communication unit
- 15:: selection request data transmitter
- 16:: first selection results data receiver
- 19:: first selection request data transmitter
- 21:: selection results data receiver
- 22:: second communication unit
- 23:: second selector
- 24:: second selection results data receiver
- 27:: second selection results data transmitter
- 61, 71:: receiver
- 62, 73, 74, 77, 79:: transmitter
- 75:: first receiver
- 76, 78:: first transmitter
- 81:: second receiver
- 82, 83:: second transmitter
- 90a, 90c, 90d, 92c:: central processing unit (CPU)
- 91 a, 91 c, 91 d, 93c:: recording medium
- 100:: communication line

### <Best Modes for Carrying Out the Invention>

The embodiments of the present invention will now be described while referring to the drawings. It should be noted that, in the following embodiments, components denoted by the same reference numerals are identical, or correspond to each other, and an explanation for them will not be repeated.

### (First Embodiment)

A first data processing apparatus, a second data processing apparatus and a communication system according to a first embodiment of the present invention will be described while referring to the drawings.

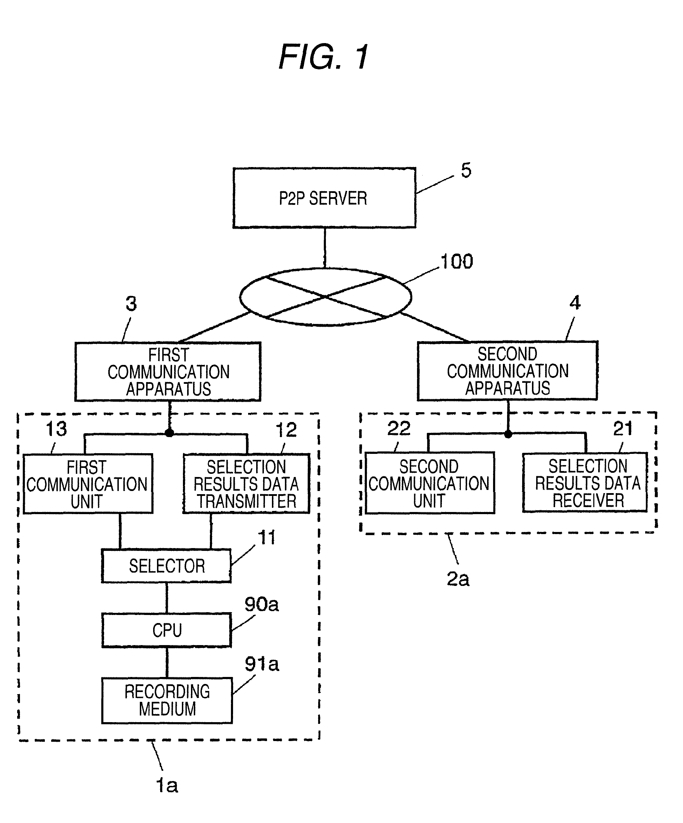

Fig. 1 is a block diagram showing the configuration of the first data processing apparatus, the second data processing apparatus and the communication system according to this embodiment. Fig. 1, the communication system, includes a first data processing apparatus 1 a, the second data processing apparatus 2a, a first communication processing apparatus 3, a second communication processing apparatus 4 and a P2P server 5. The first communication processing apparatus 3, the second communication apparatus 4 and the P2P server 5 are connected by a wired or wireless communication line 100. Here, the communication line 100 is, for example, the Internet, the Intranet or a public switched telephone network.

The first data processing apparatus 1 a includes a selector 11, a selection results data transmitter 12, a first communication unit 13, a central processing unit (hereinafter referred to as a CPU) 90a and a recording medium 91 a. It should be noted that the first data processing apparatus 1 a is, for example, a computer, a telephone, a printer, a facsimile machine, a television set, a video recording apparatus, a set top box, etc., and any apparatus that can perform P2P communication with another apparatus can be employed.

The selector 11 selects, from among two or more P2P communication channels that have been established between the first data processing apparatus 1 a and the second data processing apparatus 2a, a channel to be employed for communication, between the first data processing apparatus 1 a and the second data processing apparatus 2a, and outputs the selection results to the selection results data transmitter 12 and the first communication unit 13. It should be noted that this selection is performed after two or more P2P communication channels have been established, between the first data processing apparatus 1a and the second data processing apparatus 2a. This is because when selection is performed before two or more are established, it is uncertain whether P2P communication has actually been established along a selected channel.

Here, establishment of a P2P communication channel, between the first data processing apparatus 1 a and the second data processing apparatus 2a, indicates a state exists wherein the performance of P2P communication has been enabled, between the first data processing apparatus 1 a and the second data processing apparatus 2a. In a case wherein P2P communication is enabled by obtaining the address and the port number of a communication destination, the P2P communication channel may be established when a data processing apparatus at a communication source has obtained all information, such as the address. Or, in a case wherein it is uncertain whether communication can actually be performed along a P2P communication channel, unless it is confirmed that communication has been enabled by actually exchanging an acknowledgement packet, P2P communication may be established after the acknowledgement packet has been exchanged.

Further, selecting a channel to be employed for communication, between the first data processing apparatus 1 a and the second data processing apparatus 2a, means that a channel, which is used for communication between the first data processing apparatus 1 a and the second data processing apparatus 2a, need only be designated. Therefore, it is assumed that this embodiment covers not only a case wherein the selector 11 selects a channel to be used for communication, between the first data processing apparatus 1 a and the second data processing apparatus 2a, but also a case wherein if the selector 11 selects a channel that is not used for communication, between the first data processing apparatus 1a and the second data processing apparatus 2a, accordingly, a channel that can be used for communication between the first data processing apparatus 1 a and the second data processing apparatus 2a can be specified.

Furthermore, two or more P2P communication channels that are established between the first data processing apparatus 1 a and the second data processing apparatus 2a may be channels established via different communication lines, such as a P2P communication channel, via the Internet, and a P2P communication channel, via a public switched telephone network. That is, the communication line 100 may be formed using two or more different communication lines, such as the Internet and a public switched telephone network.

The algorithm for the selection performed by the selector 11 will now be described. Assume that a first channel to N-th channels are established between the first data processing apparatus 1 a and the second data processing apparatus 2a. Here, N is an integer of two or greater. In this case, the algorithm that the selector 11 uses to select a channel is, for example, as follows.
(1) The selector 11 may select, from N established P2P communication channels, a channel for which the first communication processing apparatus 3 or the second communication processing apparatus 4 employed has the smallest port number, or the greatest port number, on the communication line 100 side.
(2) The selector 11 may include generation means for random numbers that generates one for 1 to M (M: an integer of N or greater). And in a case wherein a random number generated by the random number generation means is divided by N and the remainder is defined as L, the selector may select the L-th channel. In a case where L = 0, assume that the N-th channel should be selected.
(3) The selector 11 may preferentially select a channel that is established using a specific method. Specifically, in a case wherein a P2P communication channel established using UPnP is included among the first to the N-th channels, this channel may be selected. Or, in a case wherein P2P communication channels established using a method other than UPnP is included in the first to the N-th channels, one of the P2P communication channels established using the method other than UPnP may be selected by using method (1) or (2). Or, a priority order may be provided for methods for establishing P2P communication channels, and from among the first to the N-th channels, a P2P communication channel established using a method having the highest priority may be selected.
(4) The selector 11 may preferentially select a channel that is established in accordance with a specific protocol. Specifically, in a case wherein a P2P communication channel for the IP version 6 (hereinafter referred to as v6) is included in the first to the N-th channels, this channel may be selected. Or, in a case wherein a P2P communication channel of the IP version 4 (hereinafter referred to as v4) is included in the first to the N-th channels, this channel may be selected. Or, in a case wherein a channel, other than a P2P communication channel of the IPv6, is included in the first to the N-th channels, this channel may be selected by a method, such as (1) to (3). Or, in a case wherein a channel, other than a P2P communication channel of the IPv4, is included in the first to the N-th channels, this channel may be selected using a method such as (1) to (3).
(5) In a case wherein a P2P communication channel that has been established employs a predetermined port of a communication processing apparatus, the selector 11 may not select the P2P communication channel. The predetermined port is, for example, a well-known port or a port employed for computer viruses.
(6) The selector 11 may select, from among two or more P2P communication channels that have been established, a channel providing the highest communication speed. In this case, the communication speed is measured for the individual P2P communication channels, and selection is performed based on the measurement results. The selector 11 or another component may perform the measurement of the communication speed.
(7) The selector 11 may select, from among two or more P2P communication channels that have been established, a channel providing the lowest communication cost. In this case, the selector 11 may include, for example, information concerning communication costs for the individual P2P communication channels, and may employ the information to calculate a communication cost required for each P2P communication channel and perform the selection by comparing the costs.

Furthermore, at a specific timing, the selector 11 may change an algorithm used for a selection, or may always employ the same algorithm. The former case is, for example, a case of changing an algorithm that is used in accordance with a time slot, a case of changing an algorithm employed for each selection, or a case of determining whether a predetermined condition has been satisfied, and changing an algorithm when the condition has been satisfied.

Further, the selector 11 may select two or more P2P communication channels. For example, the selector may select a channel to transmit information from the first data processing apparatus 1a to the second data processing apparatus 2a, and a channel to transmit information from the second data processing apparatus 2a to the first data processing apparatus 1 a. Or, the selector 11 may select a channel to perform audio communication and a channel to perform video communication between the first data processing apparatus 1a and the second data processing apparatus 2a. In this embodiment, a case for selection of one channel will be described. The CPU 90a controls the selector 11 based on a program stored on the recording medium 91 a.

The selection results data transmitter 12 transmits selection results data to the second data processing apparatus 2a. This transmission is performed using a P2P communication channel. Here, the selection results data is information indicating selection results obtained by the selector 11. The selection results data includes information with which the second data processing apparatus 2a can specify a selected P2P communication channel. In a case wherein identification information for identifying a P2P communication channel is designated for this channel, information that can specify the selected P2P communication channel may, for example, be identification information for a selected P2P communication channel, or information indicating a port number used for the selected P2P communication number, i.e., any information that can specify the selected P2P communication channel.

Here, identification information for a P2P communication channel, for example, is the name of a P2P communication channel, a number or a symbol corresponding to a P2P communication channel, etc. It should be noted that "information that can specify a selected P2P communication channel" and that is included in the selection results data may indicate a selected channel in order to designate the selected channel, or may indicate a non-selected channel to specify a selected channel.

Further, "transmission of selection results data to the second data processing apparatus 2a" includes a case wherein the transmission destination, of the selection results data is the address of the second communication processing apparatus 4 on the communication line 100 side. In a case
wherein the second communication apparatus 4 includes a NAT function, the address of the second data processing apparatus 2a can not be designated as a transmission destination for the selection results data. However, the address of the second communication processing apparatus 4 need only be designated, so that the second communication processing apparatus 4 performs address conversion, and the selection results information be transmitted to the second data processing apparatus 2a.

In addition, the selection results data transmitter 12 may include a transmission device, such as a modem or a network card, that is used for transmission, or may not include such a device. In a case wherein a transmission device is included, although not shown, a transmission device is present between the selection results data transmitter 12 and the first communication processing apparatus 3. Further, the selection results data transmitter 12 may be provided by hardware, or by software, such as a driver that drives a transmission device.

The first communication unit 13 communicates with the second data processing apparatus 2a along a channel selected by the selector 11. It is also assumed that the first communication unit 13 performs a process for establishing two or more P2P communication between the first data processing apparatus 1 a and the second data processing apparatus 2a. The process for establishing P2P communication is, for example, a process using the above described STUN, a process using UPnP or the other process. Further, the first communication unit 13 may establish both or one of a P2P communication channel for IPv4 and a P2P communication channel for IPv6.

The first communication unit 13 may perform, in parallel, at least one part of the process for establishing this plurality of P2P communication channels, or may not perform the process in parallel. When at least one part of the process for establishing a plurality of P2P communication channels is performed in parallel, the P2P communication can be started earlier than in a case wherein the individual channels are not established in parallel. Especially since whether a P2P communication channel can be established using a specific P2P communication establishment method depends on the type and the function of a communication processing apparatus, when the process for establishing a plurality of P2P communications is performed in parallel, establishing P2P communication is enabled at an early time in consonance with various types of communication processing apparatuses.

It should be noted that the first communication unit 13 may include a communication device, such as a modem or a network card, that is used for communication, or may not include such a device. In a case wherein a communication device is included, although not shown, a communication device is present between the first communication unit 13 and the first communication processing apparatus 3. Furthermore, the first communication unit 13 may be provided hardware, or by software, such as a driver that drives a communication device. It should be noted that, in a case wherein the selection results data transmitter 12 and the first communication unit 13 include devices concerning communication, these devices may be either the same means, or different means.

The second data processing apparatus 2a includes a selection results data receiver 21 and a second communication unit 22. It should be noted that the second data processing apparatus 2a is, for example, a computer, a telephone, a printer, a facsimile machine, a television set, a video recording apparatus, a set top box, etc., and any apparatus that can perform P2P communication with another apparatus can be employed.

The selection results data receiver 21 receives selection results data. It should be noted that the selection results data receiver 21 may include a reception device, such as a modem or a network card, that is used for reception, or may not include such a device. In a case wherein a reception device is included, although not shown, a reception device is present between the selection results data receiver 21 and the second communication processing apparatus 4. Further, the selection results data receiver 21 may be provided by hardware, or by software, such as a driver that drives a reception device.

The second communication unit 22 employs the selection results data received by the selection results data receiver 21, and communicates with the first data processing apparatus 1 a along a channel selected by the selector 11. That is, the second communication unit 22 refers to information, which is included in the selection results data and with which a selected P2P channel can be designated, and communicates with the first data processing apparatus 1a along a P2P communication channel indicated by this information. It is also assumed that the second communication unit 22, as well as the first communication unit 13, performs a process for establishing two or more P2P communications between the first data processing apparatus 1a and the second data processing apparatus 2a.

It should be noted that the second communication unit 22 may include a communication device, such as a modem or a network card, that is used for communication, or may not include such a device. In a case wherein a communication device is included, although not shown, a communication device is present between the second communication unit 22 and the second communication processing apparatus 4. In addition, the second communication unit 22 may be provided by hardware, or by software, such as a driver that drives a communication device.

In a case wherein the selection results data receiver 21 and the second communication unit 22 include devices concerning communication, these may be the same means, or different means.

The first communication processing apparatus 3 performs a process concerning communication between the first data processing apparatus 1 a and the second communication processing apparatus 4 or the P2P server 5. The first communication processing apparatus 3 may be an apparatus having a NAT function that performs address conversion between a private address and a global address, an apparatus having a firewall function for packet filtering, or an apparatus having the two functions. Here, packet filtering is a function, for example, for selecting a reception packet based on a reception filter rule.

The reception filter rule includes, for example: an Address Sensitive filter, which permits reception of a packet only from an address whereat the packet was transmitted, from a port; a Port Sensitive filter, which allows reception of a packet only from a port from which the packet was transmitted; and No filter, for which a filter is not present. In this embodiment, an explanation will be given for a case wherein the first communication processing apparatus 3 is an apparatus having a NAT function.

The second communication processing apparatus 4 performs a process related to communication between the second data processing apparatus 2a and the first communication processing apparatus 3 or the P2P server 5. The second communication processing apparatus 4, as well as the first communication processing apparatus 3, may be an apparatus having a NAT function that performs address conversion between a private address and a global address, an apparatus having a firewall function for packet filtering, or an apparatus having both functions. In this embodiment, an explanation will given for a case wherein the second communication apparatus 4 is an apparatus having a NAT function.

The P2P server 5 performs a process for establishing P2P communication between the first data processing apparatus 1a and the second data processing apparatus 2a. For example, the address of the second communication processing apparatus 4 is transmitted to the first data processing apparatus 1 a, or the address of the first communication processing apparatus 3 is transmitted to the second data processing apparatus 2a. It should be noted that, since the process performed by the P2P server 5 is the same as the process performed by a server using STUN in the conventional art, no explanation for this will be given.

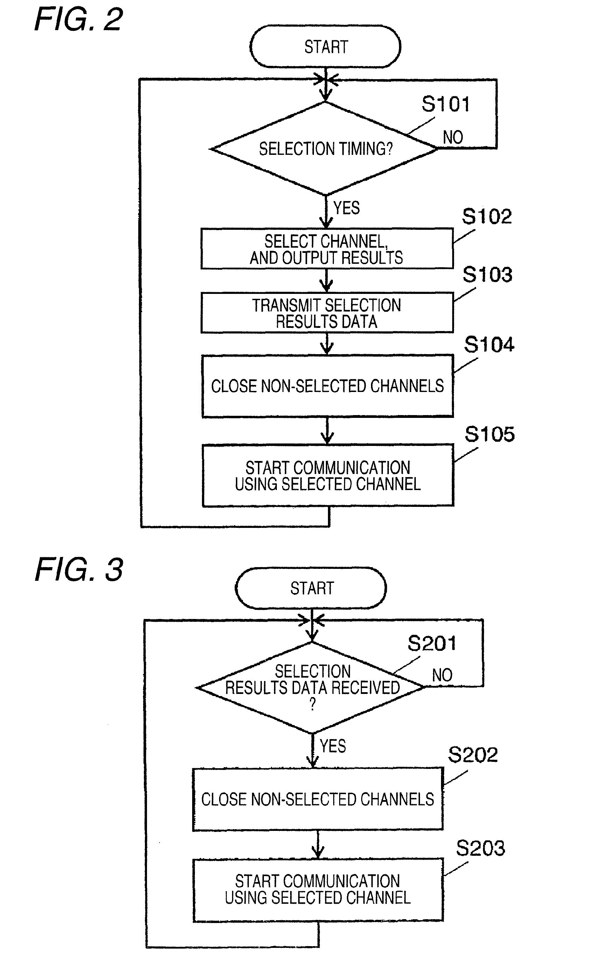

The operation of the first data processing apparatus 1a in this embodiment will now be described by employing a flowchart in Fig. 2. It should be noted that the flowchart in Fig. 2 shows only the processing related to channel selection performed by the first data processing apparatus 1 a, and the processing for establishing a P2P communication channel and the other process are not shown. However, assume that these processes are separately performed, and that this is applied for the succeeding flowcharts.

The selector 11 determines whether a timing for performing selection has elapsed (step S101). In a case wherein the timing for performing selection has elapsed, program control advances to step S102, or in a case wherein the timing has not yet elapsed, the process at step S101 is repeated until the timing for performing selection has elapsed. Here, a timing for performing selection may, for example, be the time at which the first communication unit 13 established a plurality of P2P communication channels, or may be a time after the first communication unit 13 has established a plurality of P2P communication channels, and it has been determined whether all the channels to be planned are enabled to be established, or may be another timing.

The selector 11 selects, from among a plurality of P2P communication channels, a channel to be used for communication between the first data processing apparatus 1a and the second data processing apparatus 2a, and outputs information for the selected channel (step S102). The above described algorithm, for example, is employed for selection.

The selection results data transmitter 12 forms selection results data that is information indicating selection results obtained by the selector 11, and transmits the selection results data to the second data processing apparatus 2a (step S103). The selection results data transmitter 12 obtains, for example, from the first communication unit 13, the address of the second data processing apparatus 2a that is a transmission destination for the selection results data.

The first communication unit 13 closes the P2P communication channels that are not selected by the selector 11 (step S104). In a case wherein a P2P communication channel established using UPnP, for example, is not selected, as a process for closing the P2P communication channel, the first communication unit 13 employs UPnP and abandons the setup of port mapping, etc., in the first communication apparatus 3.

The first communication unit 13 employs the channel selected by the selector 11, and starts communication with the second data processing apparatus 2a (step S105). Then, program control returns to step S101. It should be noted that communication may be started after the first data processing apparatus 1 a has received information, indicating permission for the start of communication, from the second data processing apparatus 2a that received the selection results data. Further, P2P communication started at step S105 may be ended when transmission/reception of all data for communication has been completed, or when, for example, power to the first data processing apparatus 1a or the second data processing apparatus 2a is turned off, or when the first data processing apparatus 1a or the second data processing apparatus 2a accepts an instruction to terminate communication.

It should be noted that the processing in the flowchart in Fig. 2 is terminated by turning off the power, or by a process end interrupt. Further, in the flowchart in Fig. 2, when step S105 is to be performed after step S103, an arbitrary order is employed to perform the processes at steps S103 to S105. The same thing is applied for the succeeding flowcharts.

The operation of the second data processing apparatus 2a of this embodiment will now be described by employing the flowchart in Fig. 3. It should be noted that the flowchart in Fig. 3 shows only the processing, related to communication based on selection results data, performed by the second data processing apparatus 2a, and processes for establishing P2P communication channels and other process are not shown. However, assume that these processes are separately performed.

The selection results data receiver 21 determines whether selection results data have been received (step S201). In a case wherein the selection results data have been received, program control advances to step S202, or in a case wherein the data have not been received, the process at step S201 is repeated until the selection results data have been received. Based on the selection results data, the second communication unit 22 closes P2P communication channels that are not selected by the selector 11 (step S202).

The second communication unit 22 starts communication with the first data processing apparatus 1 a using a channel that has been designated by the selection results data and has been selected by the selector 11 (step S203). And program control returns to step S201. Further, as in the explanation for step S105, P2P communication started at step S203 is terminated when the transmission/reception of all the data for communication has been completed.

It should be noted that the processing in the flowchart in Fig. 3 is ended by turning off the power or by a process end interrupt. Furthermore, in the flowchart in Fig. 3, an arbitrary order is employed to perform the processes at steps S202 and S203. The same thing is applied for the succeeding flowcharts.

The operation of the communication system in this embodiment will now be described by employing a specific example. In this example, assume that a P2P communication channel using the above described STUN (hereinafter referred to as a STUN channel), a P2P communication channel using UPnP (hereinafter referred to as a UPnP channel) and a P2P communication channel described in JP-A-2004-180003 (hereinafter referred to as a reference 1 channel) are established.

Moreover, assume that, in a case wherein two or more P2P communication channels are established, and wherein the established channels are other than UPnP channels, the selector 11 selects, from among the channels other than UPnP channels, a channel that employs the smallest port number of the second communication processing apparatus 4. It should be noted that, since a method for establishing the reference 1 channel is described in JP-A-2004-180003, and a method for establishing a STUN channel is described in a reference provided in the background art, no explanation for them will be given.

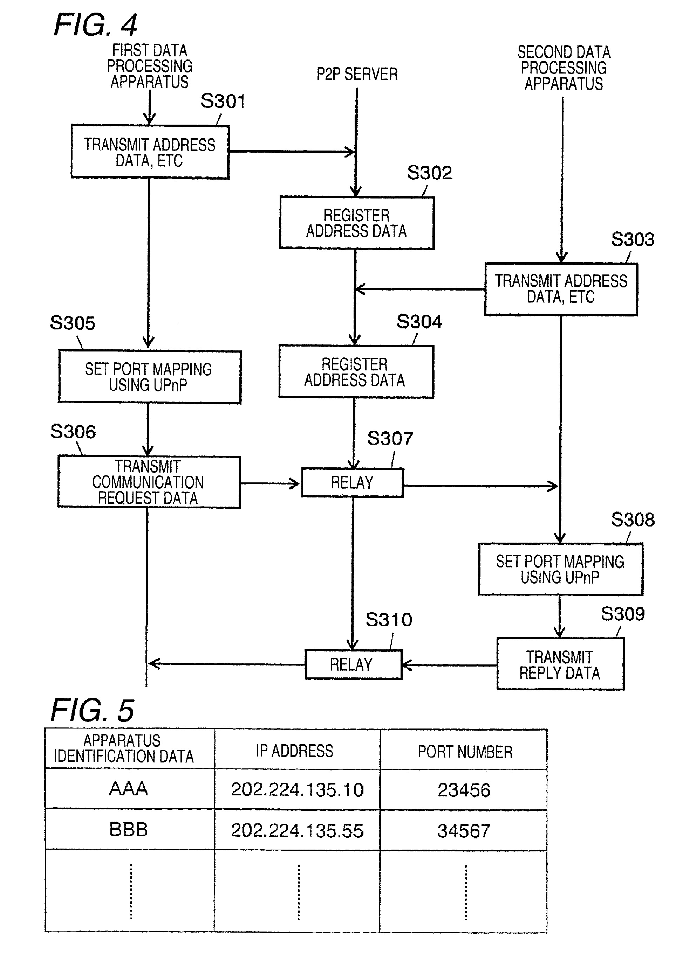

First, a method for establishing P2P communication using UPnP will be briefly described by using the flowchart in Fig. 4. Fig. 4 is a diagram showing data transmission and reception, etc., performed among the first data processing apparatus 1 a, the second data processing apparatus 2a and the P2P server 5.

The first communication unit 13 of the first data processing apparatus 1 a transmits, to the P2P server 5, address data and apparatus identification data, which is information for identifying the first data processing apparatus 1 a (step S301). Here, address data is information that includes: an IP address, which is employed when the P2P server 5 transmits information to the first data processing apparatus 1 a; and a port number. Further, assume that the apparatus identification data for the first data processing apparatus 1 a is "AAA". It should be noted that, strictly speaking, when the first communication processing apparatus 3 has a NAT function, the address data is added by the first communication processing apparatus 3.

Therefore, the first communication unit 13 forms a packet that includes the apparatus identification data "AAA" of the first data processing apparatus 1 a, and transmits this packet to the P2P server 5 via the first communication processing apparatus 3. It is assumed that the first communication processing apparatus 3 performs address conversion for the packet to obtain, as the IP address and the port number of a transmission source, IP address "202.224.135.10" and port number "23456" of the first communication processing apparatus 3 on the communication line 100 side, and that the resultant packet is transmitted to the P2P server 5.

The P2P server 5 receives the address data and the apparatus identification data from the first data processing apparatus 1a, and employs these data to perform address data registration (step S302). Fig. 5 is a diagram showing example correlations between apparatus identification data, IP addresses and port numbers of this embodiment. Specifically, as shown in Fig. 5, a record that correlates apparatus identification data, an IP address and a port number, and is stored. A first record in Fig. 5 corresponds to the first data processing apparatus 1 a.

The second communication unit 22 of the second data processing apparatus 2a, as well as the first communication unit 13, forms a packet that includes apparatus identification data "BBB", for of the second data processing apparatus 2a, and transmits this packet to the P2P server 5 (step S303). It is assumed that the second communication processing apparatus 4 performs address conversion for this packet to obtain IP address "202.224.135.55" and port number "34567" for the second communication apparatus 4, which is a transmission source, and that the resultant packet is transmitted to the P2P server 5.

The P2P server 5 receives the address data and the apparatus identification data from the second data processing apparatus 2a, and employs these data to register the IP address, etc., as indicated in the second record in Fig. 5 (step S304).

It should be noted that the first data processing apparatus 1a and the second data processing apparatus 2a may repetitively transmit a packet to the P2P server 5, so that after an address data registration process has been performed the information transmitted by the P2P server 5 can be received via the communication processing apparatus. This repetitively transmitted packet is called a repeated packet. Generally, a port maintaining period is designated for a communication apparatus, and this is because, after the port maintenance period has elapsed since the last communication was performed between the data processing apparatus and the P2P server 5, the data processing apparatus cannot receive a packet transmitted by the P2P server 5. Therefore, by transmitting a repeated packet, the data processing apparatus can receive, at any time, a packet transmitted by the P2P server 5.

A cycle for transmitting a repeated packet is set shorter than the port maintaining period of the communication processing apparatus. The payload of a repeated packet may include some information, or may not include any information. A repeated packet is, for example, a packet that conforms to the User Datagram Protocol (hereinafter referred to as the UDP) or the Transmission Control Protocol (hereinafter referred to as the TCP). A cycle for transmitting a repeated packet may be either fixed or not fixed.

The first communication unit 13 employs the UPnP function to access the first communication processing apparatus 3, and sets up port mapping for the first communication apparatus 3 (step S305). Specifically, a setup is performed, which indicates the performance of port mapping between a port having port number "25000" (hereinafter, also referred to as "port 25000"). The same goes for the other port numbers of the first communication processing apparatus 3 on the wide area network (hereinafter referred to as a WAN) side and a port having port number "20000", of the first data processing apparatus 1 a. According to this port mapping setup, the first communication processing apparatus 3 performs a process for transmitting, to the port 20000 of the first data processing apparatus 1 a, a packet that has been received by the port 25000 of the first communication apparatus 3 on the communication line 100 side.

The first communication unit 13 transmits, to the P2P server 5, communication request data, which is information for requesting the start of P2P communication with the second data processing apparatus 2a (step S306). The communication request data includes: IP address "202.224.135.10", of the first communication processing apparatus 3 on the communication line 100 side; port number "25000" of the first communication processing apparatus 3 on the communication line 100 side, which is designated at step S305 using the UPnP function; apparatus identification data "AAA" for a transmission source; and apparatus identification data "BBB" for a transmission destination. Here, the first communication unit 13 may, for example, employ the UPnP function to obtain the IP address of the first communication processing apparatus 3 on the communication line 100 side, or may employ the P2P server 5, etc., to obtain the IP address.

The P2P server 5 relays the communication request data received from the first data processing apparatus 1a (step S307). Specifically, upon receiving the communication request data, an IP address and a port number are obtained from the second record in Fig. 5, in correlation with apparatus identification data "BBB" for the transmission destination that is included in the communication request data. And the received communication request data is transmitted to the IP address and the port number. The communication request data is received by the second communication unit 22 of the second data processing apparatus 2a. Then, the second communication unit 22 stores the IP address and the port number for the first communication processing apparatus 3 and the apparatus identification data of the first data processing apparatus 1 a, all of which are included in the communication request data.

The second communication unit 22, as well as the first communication unit 13, employs the UPnP function to access the second communication processing apparatus 4, and sets up port mapping for the second communication processing apparatus 4 (step S308). Specifically, a setup is performed, which indicates the performance of port mapping between a port having port number "35000", of the second communication processing apparatus 4 on the WAN side, and a port having port number "30000" of the second data processing apparatus 2a. According to this port mapping setup, the second communication processing apparatus 4 performs a process for transmitting, to the port 30000 of the second data processing apparatus 2a, a packet that is received at the port 35000 of the second communication processing apparatus 4 on the communication line 100 side.

The second communication unit 22 transmits, to the P2P server 5, reply data to the communication request data (step S309). The reply data includes: IP address "202.224.135.55", for the second communication processing apparatus 4 on the communication line 100 side; port number "35000", for the second communication processing apparatus 4 on the communication line 100 side, which is designated at step S308 using the UPnP function; and apparatus identification data "BBB", for a transmission source, and apparatus identification data "AAA, for a transmission destination. Here, the second communication unit 22 may, for example, employ the UPnP function to obtain the IP address of the second communication processing apparatus 4 on the communication line 100 side, or may employ the P2P server 5, etc., to obtain the IP address.

The P2P server 5 relays the reply data received from the second data processing apparatus 2a (step S310). Specifically, upon receiving the reply data, an IP address and a port number are obtained from the first record in Fig. 5, in correlation with the apparatus identification data "AAA", for the transmission destination that are included in the reply data. And the received reply data are transmitted to the IP address and the port number. The reply data is received by the first communication unit 13 of, for first data processing apparatus 1a. Then, the first communication unit 13 stores the IP address and the port number for the second communication processing apparatus 4 that are included in the communication request data.

Thereafter, the first data processing apparatus 1 a and the second data processing apparatus 2a can perform P2P communication using port mapping, which has been designated using the respective UPnP functions. Specifically, the first data processing apparatus 1 a transmits a packet to the port 35000 of the second communication processing apparatus 4 on the communication line 100 side, so that data can be transmitted to the second data processing apparatus 2a, without passing through a server. Further, the second data processing apparatus 2a transmits a packet to the port 25000 of the first communication processing apparatus 3 on the communication line 100 side, so that data can be transmitted to the first data processing apparatus 1 a, without being transmitted via the server.

It should be noted that in Fig. 4 the order of step S301 and step S303 does not matter. That is, the transmission of address data, etc., by the first data processing apparatus 1a, and the registration of address data, by the P2P server 5 (steps S301 and S302), may be performed after the transmission of address data, etc., by the second data processing apparatus 2a and the registration of address data, by the P2P server 5 (steps S303 and S304). Further, the setup of port mapping at step S308 may be performed prior to steps S306 and S307.

Assume that establishing the STUN channel and establishing a document 1 channel are also performed in parallel to the establishing of a UPnP channel. Here, suppose that, for the STUN channel, port number "26000" of the first communication processing apparatus 3 on the communication line 100 side is employed, and port number "36000" of the second communication processing apparatus 4 on the communication line 100 side is employed. Furthermore, assume that, for the document 1 channel, port number "27000", of the first communication processing apparatus 3 on the communication line 100 side, is employed, and port number "37000", of the second communication processing apparatus 4 on the communication line 100 side, is employed.

When the selector 11 detects that the first communication unit 13 has established three P2P communication channels, the selector 11 determines that a timing for performing selection has been reached (step S101). And since a STUN channel, other than a UPnP channel and the document 1 channel, is established, the selector 11 selects, of the STUN channel and the document 1 channel, a channel for which the port number of the second communication processing apparatus 4 is smaller, i.e., the STUN channel. And the selector 11 outputs, to the first communication unit 13 and the selection results data transmitter 12, results to the effect that the STUN channel has been selected (step S102).

Upon receiving the selection results from the selector 11, the selection results data transmitter 12 forms selection results data that includes information indicating that the STUN channel has been selected. And the selection results data transmitter 12 obtains, from the first communication unit 13, IP address "202.224.135.55" and port number "36000", of the second communication processing apparatus 4 for the STUN channel, and transmits the selection results data to the IP address and the port number (step S103).

Upon receiving the selection results from the selector 11, the first communication unit 13 closes the UPnP channel and the document 1 channel that have not been selected (step S104). Specifically, the setup of port mapping for the UPnP channel, which has been performed for the first communication processing apparatus 3, is released. Further, packet waiting at a port for the document 1 channel, which is designated for the first data processing apparatus 1 a, is ended.

On the other hand, the second communication processing apparatus 4 performs address conversion for the selected results data received from the first data processing apparatus 1 a, and the selection results data receiver 21 of the second data processing apparatus 2a receives the resultant data (step S201). Based on the selection results data, the second communication unit 22 closes channels other than the STUN channel used for P2P communication with the first data processing apparatus 1 a, i.e., closes the UPnP channel and the document 1 channel (step S202). The same method as used by the first communication unit 13 is employed to close channels. Thereafter, the first communication unit 13 and the second communication unit 22 start P2P communication using the STUN channel (steps S105 and S203).

The first data processing apparatus 1 a and the second data processing apparatus 2a may start the P2P communication in a manner, for example, that first the first communication unit 13 transmits an acknowledge packet to the second data processing apparatus 2a, and in accordance with this transmission of the acknowledge packet, the second communication unit 22 transmits a reply packet to the first data processing apparatus 1 a.

In this specific example, an explanation has been given for a case wherein the selection results data are transmitted along the selected P2P communication channel. However, the selection results data may be transmitted along a P2P communication channel that has not been selected. For example, in a case wherein a STUN channel has been selected, a UPnP channel may be employed to transmit the selection results data from the first data processing apparatus 1 a to the second data processing apparatus 2a.

As described above, according to the communication system of this embodiment, in a case wherein two or more P2P communication channels have been established between the first data processing apparatus 1a and the second data processing apparatus 2a, the first data processing apparatus 1a can select one of the channels for output, and can transmit the selection results to the second data processing apparatus 2a along a P2P communication channel. As a result, the second data processing apparatus 2a can close channels that have not been selected.

Further, in a case wherein communication is to be performed using, for example, two or more channels, the first data processing apparatus 1 a need only transmit the selection results data to notify the second data processing apparatus 2a which channel is to be used for what kind of communication. For example, it can be notified, for example, that UPnP channel is employed for audio communication, and a STUN channel is employed for video communication, or a UPnP channel is employed for transmission from the first data processing apparatus 1 a to the second data processing apparatus 2a, and a STUN channel is employed for transmission from the second data processing apparatus 2a to the first data processing apparatus 1 a. Thereafter, the first data processing apparatus 1 a and the second data processing apparatus 2a can perform P2P communication using a selected channel.

Furthermore, since a P2P communication channel that has not been selected is closed, in a case wherein a P2P communication channel is established and thereafter a data processing apparatus must monitor a port used for the channel, the processing load for the monitoring can be reduced. In addition, since the setup of port mapping for a communication processing apparatus is released in a case wherein, for example, a UPnP channel is not selected, a phenomenon in that the port of the communication processing apparatus is left open, because of the setup of port mapping, can be avoided. Therefore, an unauthorized access, etc., via a port opened by the setup of port mapping can be prevented, and safety can be increased for a data processing apparatus connected to the communication processing apparatus.

### (Second Embodiment)

A first data processing apparatus, a second data processing apparatus, a server and a communication system according to a second embodiment of the present invention will now be described while referring to the drawings. The communication system of this embodiment transmits selection results data via a server.

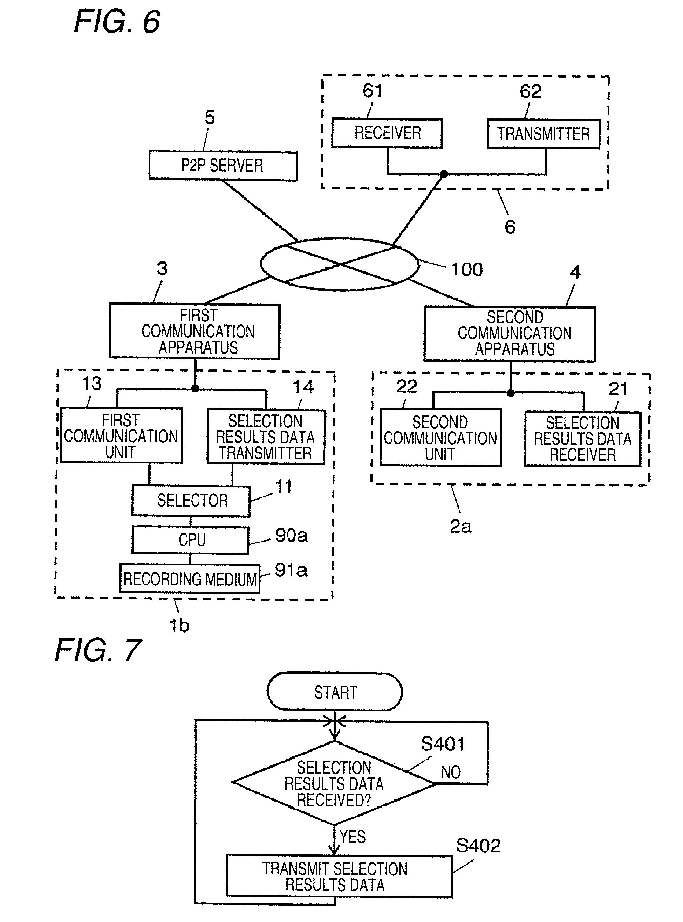

Fig. 6 is a block diagram showing the configuration for the first data processing apparatus, the second data processing apparatus, the server and the communication system of this embodiment. In Fig. 6, the communication system of this embodiment includes a first data processing apparatus 1 b, a second data processing apparatus 2a, a first communication processing apparatus 3, a second communication processing apparatus 4, a P2P server 5 and a server 6. It should be noted that components other than the first data processing apparatus 1b and the server 6 are the same as those in the first embodiment, and no explanation for them will be given. It should be noted, however, that a selection results data receiver 21 of the second data processing apparatus 2a receives selection results data transmitted by the server 6.

The first data processing apparatus 1b includes a selector 11, a first communication unit 13, a selection results data transmitter 14, a CPU 90a and a recording medium 91 a. It should be noted that components other than the selection results data transmitter 14 are the same as those in the first embodiment, and no explanation for them will be given.

The selection results data transmitter 14 transmits selection results data to the server 6. Here, as in the first embodiment, the selection results data includes information with which an apparatus at a transmission destination (i.e., the second data processing apparatus 2a in this embodiment) can specify a selected P2P communication channel, and information that can specify a destination for information relative to the selection results data. The information that can specify the destination for the transmission of selection results data may, for example, be the address and the port number of the second data processing apparatus 2a, or may be apparatus identification data for the second data processing apparatus 2a in a case wherein the server 6 includes a correlation of apparatus identification data, an IP address and a port number. That is, any information can be employed so long as a transmission destination can be specified.

In addition, the selection results data transmitter 14 may include a transmission device, such as a modem or a network card, that is used for transmission, or may not include such a device. In a case wherein a transmission device is not included, although not shown, a transmission device is present between the selection results data transmitter 14 and the first communication processing apparatus 3. Further, the selection results data transmitter 14 may be provided by hardware, or by software, such as a driver that drives a transmission device.

In a case wherein the first communication unit 13 and the selection results data transmitter 14 include devices concerning communication, these may be the same means, or different means.

The server 6 includes a receiver 61 and a transmitter 62. This server 6 relays, to one data processing apparatus, information received from the other data processing apparatus, and may be a server that employs, for example, the Session Initiation Protocol (hereinafter referred to as the SIP).

The receiver 61 receives selection results data. The selection results data is data transmitted by the first data processing apparatus 1a. It should be noted that the receiver 61 may include a reception device, such as a modem or a network card, that is used for reception, or may not include such a device. In a case wherein a reception device is not included, although not shown, a reception device is present between the receiver 61 and a communication line 100. Further, the receiver 61 may be provided by hardware, or by software, such as a driver that drives a reception device.

The transmitter 62 transmits, to the second data processing apparatus 2a, selection results data received by the receiver 61. Here, the destination of the transmission of the selection results data is indicated by information that is included in the selection results data and that can specify a destination for the transmission of the selection results data. It should be noted that the selection results data transmitted by the transmitter 62 may be exactly the same as those received by the receiver 61, or some information may be deleted from the selection results data, or may be added thereto. In the latter case, for example, the transmitter 62 may delete, from the selection results data received by the receiver 61, information that can specify a destination for the transmission of the selection results data, and may transmit the resultant information.

It should be noted that the transmitter 62 may include a transmission device, such as a modem or a network card, that is used for transmission, or may not include such a device. In a case wherein a transmission device is not included, although not shown, a transmission device is present between the transmitter 62 and the communication line 100. Further, the transmitter 62 may be provided by hardware, or by software, such as a driver that drives a transmission device. In a case wherein the receiver 61 and the transmitter 62 include devices concerning communication, these may be the same means, or different means.

The operation of the communication system of this embodiment will now be described. The operation of the first data processing apparatus 1 b is the same as that in the flowchart in Fig. 2 for the first embodiment, except that selection result data transmitted by the selection result data transmitter 14 includes information that can specify a destination for the transmission of selection results data, and no further explanation for it will be given. The operation of the second data processing apparatus 2a is also the same as that in Fig. 3 for the first embodiment, except that the selection result data receiver 21 receives selection result data transmitted by the server 6, and no further explanation for it will be given.

Fig. 7 is a flowchart showing the operation of the server 6 for this embodiment.

The receiver 61 determines whether the selection results data have been received (step S401). In a case wherein the selection results data has been received, program control advances to step S402. In a case wherein the selection results data have not been received, the process at step S401 is repeated until the data is received. The transmitter 62 transmits, to the transmission destination, the selection results data received by the receiver 61 (step S402). Based on information that is included in the selection results data and that specifies a transmission destination, the transmitter 62 can obtain the transmission destination for the selection results data. And program control returns to step S401. In the flowchart in Fig. 7, the processing is terminated by turning off the power, or by a process end interrupt.

The operation of the communication system of this embodiment will now be described by employing a specific example. It should be noted that this operation is the same as the specific example given for the first embodiment, except for the process concerning the transmission of the selection results data from the first data processing apparatus 1 b to the second data processing apparatus 2a, and no further explanation will be given. Further, assume that, also for the sever 6, the first data processing apparatus 1b and the second data processing apparatus 2a perform the same processes as steps S301 and S303 for the first embodiment. And assume that, as a result, the server 6 stores information that correlates apparatus identification data, an IP address and a port number shown in Fig. 5. Also, suppose that the first data processing apparatus 1b and the second data processing apparatus 2a transmit a repeated packet to the server 6, so that information can be received from the server 6.

When a STUN channel is selected from three channels of a STUN channel, a UPnP channel and a document 1 channel, the selection results data transmitter 14 forms selection results data that includes: information indicating that the STUN channel has been selected; and apparatus identification data "BBB" for a transmission destination. And the selection results data transmitter 14 transmits the selection results data to the server 6 (step S103). It should be noted that the selection results data transmitter 14 stores the IP address of the server 6 in advance.

The receiver 61 of the server 6 receives the selection results data transmitted by the first data processing apparatus 1b, and transfers the data to the transmitter 62 (step S401). The transmitter 62 examines information in Fig. 5 stored on a recording medium (not shown), obtains IP address "202.224.135.55" and port number "36000", which are correlated with the transmission destination apparatus identification data "BBB" that is included in the selection results data received by the receiver 61, and transmits the selection results data to the IP address and the port number, as a transmission destination (step S402). The second communication processing apparatus 4 performs address conversion for the selection results data, and the selection results data receiver 21 receives the resultant data. Since the succeeding process is the same as in the first embodiment, no further explanation will be given.

As described above, according to the communication system of this embodiment, as in the first embodiment, the first data processing apparatus 1 b and the second data processing apparatus 2a can perform P2P communication using a channel that is selected from two or more P2P communication channels. Furthermore, the selection results data can be transmitted from the first data processing apparatus 1 b to the second data processing apparatus 2a via the server 6.

### (Third Embodiment)

A first data processing apparatus, a second data processing apparatus and a communication system according to a third embodiment of the present invention will now be described while referring to the drawings. The communication system of this embodiment selects a P2P communication channel for the individual data processing apparatuses.

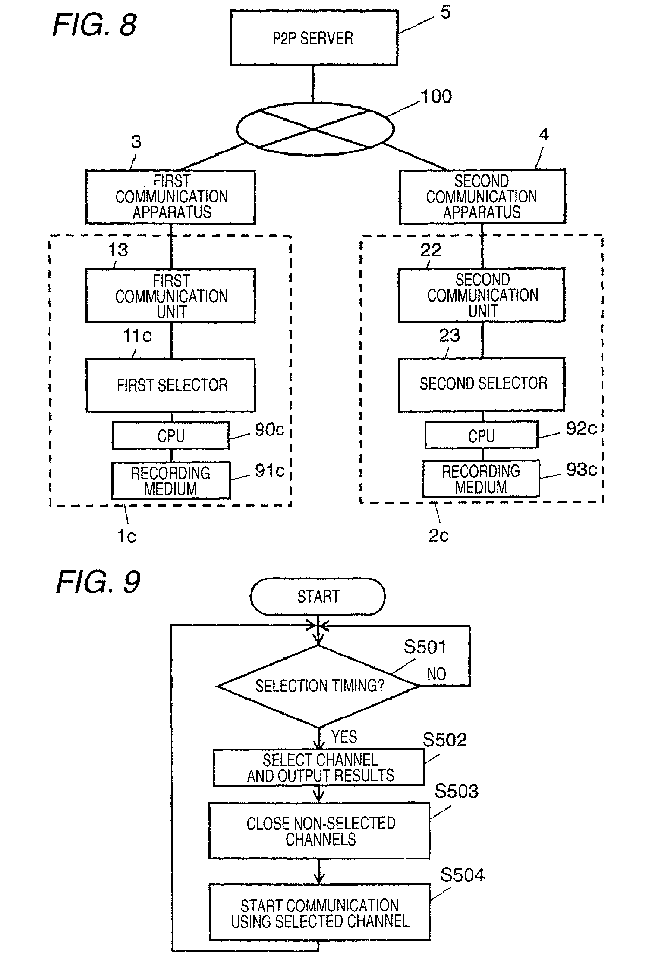

Fig. 8 is a block diagram showing the configuration for the first data processing apparatus, the second data processing apparatus and the communication system of this embodiment. In Fig. 8, the communication system of this embodiment includes a first data processing apparatus 1c, a second data processing apparatus 2c, a first communication processing apparatus 3, a second communication processing apparatus 4 and a P2P server 5. It should be noted that components other than the first data processing apparatus 1c and the second data processing apparatus 2c are the same as those in the first embodiment, and no explanation for them will be given.

The first data processing apparatus 1 c includes a first selector 11c, a first communication unit 13, a CPU 90c and a recording medium 91c. It should be noted that the first selector 11c and the first communication unit 13 are the same as the communication unit 11 and the first communication unit 13 of the first embodiment, and no explanation for them will be given. The first data processing apparatus 1c is the same as the first data processing apparatus 1 a of the first embodiment, except that it does not transmit selection results data.

The second data processing apparatus 2c includes a second communication unit 22, a second selector 23, a CPU 92c and a recording medium 93c. The second communication unit 22 is the same as that of the first embodiment, except that the second communication unit 22 communicates with the first data processing apparatus 1c using a channel selected by the second selector 23, instead of employing a channel selected by the selector 11 and using selection results data received by the selection results data receiver 21. Thus, no further explanation will be given.

From among two or more P2P communication channels that are established between the first data processing apparatus 1c and the second data processing apparatus 2c, the second selector 23 selects a channel to be used for communication between the first data processing apparatus 1c and the second data processing apparatus 2c, and outputs the results to the second communication unit 22. This selection is performed by employing the same algorithm as that used by the first selector 11c. It should be noted that the second selector 23 is the same as the first selector 11 c, except that channel selection is performed for the second data processing apparatus 2c, and no further explanation will be given. The CPU 90c controls the first selector 11c, based on a program stored on the recording medium 91c. The CPU 92c controls the second selector 23, based on a program stored on the recording medium 93c.

The operation of the first data processing apparatus 1c of this embodiment will now be described by employing the flowchart in Fig. 9. Fig. 9 is a flowchart showing the operations of the first and second data processing apparatuses of this embodiment.

The first selector 11 c determines whether a timing to perform selection has been reached (step S501). In a case wherein a timing to perform selection is reached, program control advances to step S502, or in a case wherein the timing is not reached, the process at step S501 is repeated until a timing for the performance of selection is reached. Here, a timing for performing a selection may, for example, be the timing at which the first communication unit 13 has established a plurality of P2P communication channels, or may be a timing, after the first communication unit 13 has established a plurality of P2P communication channels, and it has been determined that all the planned channels have been enabled, and are to be established, or may be another timing.

The first selector 11c selects, from among a plurality of P2P communication channels, a channel to be used for communication between the first data processing apparatus 1c and the second data processing apparatus 2c, and outputs the results to the first communication unit 13 (step S502). The above described algorithm, for example, is employed for selection. The first communication unit 13 closes the P2P communication channels that have not been selected by the first selector 11c (step S503).

The first communication unit 13 employs the channel selected by the first selector 11c, and begins communicating with the second data processing apparatus 2c (step S504). Then, program control returns to step S501. It should be noted that communication may be started after the first data processing apparatus 1c has received information, indicating it is permitted to start communication, from the second data processing apparatus 2c that received the selection results data. Further, P2P communication started at step S505 may be ended when the transmission/reception of all data for communication has been completed, or when, for example, power for the first data processing apparatus 1c or the second data processing apparatus 2c is turned off, or when the first data processing apparatus 1c or the second data processing apparatus 2c accepts an instruction for terminating communication.

It should be noted that the processing in the flowchart in Fig. 9 is terminated by turning power off, or by a process end interrupt.

Moreover, the operation of the second data processing apparatus 2c in this embodiment is the same as that in the flowchart in Fig. 9, except that the first data processing apparatus 1c is replaced with the second data processing apparatus 2c, the first communication unit 13 is replaced with the second communication unit 22, and the first selector 11c is replaced with the second selector 23. Thus, no further explanation will be given.

The operation of the communication system for this embodiment will be described by employing a specific example. In this specific example, as in the first embodiment, it is assumed that establishment of a STUN channel, a UPnP channel and a document 1 channel is performed, and that the individual channels have been established. Since the process for establishing these channels is the same as in the first embodiment, no explanation for it will be given. Furthermore, in the specific example, assume that, from two or more P2P communication channels that are established between the first data processing apparatus 1c and the second data processing apparatus 2c, the first selector 11c and the second selector 23 select a channel, for which the smallest port number on the communication line 100 side is provided for the first communication apparatus 3 and for the second communication processing apparatus 4.

In a case wherein there are two or more channels having the smallest port number, it is assumed that the port number of a communication processing apparatus on a calling side is employed for determination. The calling side is a side where communication is initiated. For example, in a case wherein the first data processing apparatus 1c begins to communicate with the second data processing apparatus 2c, the first communication apparatus 3 serves as a communication processing apparatus on the calling side.

Here, generally, so long as the IP address and the port number, on the communication line 100 side, of a communication processing apparatus at a communication destination are obtained, the first data processing apparatus 1c and the second data processing apparatus 2c can perform P2P communication, and for this specific example it is assumed that the port number, on the communication line 100 side, of a communication processing apparatus at a communication source has also been obtained. For example, the first data processing apparatus 1c or the second data processing apparatus 2c can ask the P2P server 5 for information, or can receive information from a data processing apparatus on the other communication side, so that the port number of the communication processing apparatus at the communication source can be obtained.

Here, assume that, for the UPnP channel, port number "25000" for the first communication processing apparatus 3 is employed, and port number "35000" for the second communication processing apparatus 4 is employed. Further, assume that, for the STUN channel, port number "26000", for the first communication processing apparatus 3, is employed, and port number "36000", for the second communication processing apparatus 4, is employed. Furthermore, assume that, for the document 1 channel, port number "27000", for the first communication processing apparatus 3, is employed, and port number "37000", for the second communication processing apparatus 4, is employed.

When the first selector 11c detects that three P2P communication channels have been established by the first communication unit 13, the first selector 11 c determines that a timing to perform selection has been reached (step S501). And since port number "25000", for the first communication processing apparatus 3 on the communication line 100 side, which is used for the UPnP channel, is the smallest of the six port numbers used for the three P2P communications, the first selector 11c selects the UPnP channel (step S502). Then, a notification indicating the STUN channel has been selected is transmitted to the first communication unit 13.

*Upon receiving the selection results from the first selector 11c, the first communication unit 13 closes the STUN channel and the document 1 channel that have not been selected (step S503). Specifically, packet waiting at ports that are designated for the first data processing apparatus 1c, for the STUN channel, and the document 1 channel is ended.

On the other hand, the second data processing apparatus 2c, as well as the first data processing apparatus 1 c, performs the selection of a P2P communication channel. That is, when the second selector 23 detects that three P2P communication channels have been established by the second communication unit 22, the second selector 23 determines a timing, for performing selection, has been reached (step S501). And since port number "25000", of the first communication processing apparatus 3 on the communication line 100 side, which is employed for the UPnP channel, is the smallest among the six port numbers used for the three P2P communications, the second selector 23 selects the UPnP channel. And a notification indicating that the STUN channel has been selected is output to the second communication unit 22 (step S502).

Upon receiving the selection results from the second selector 23, the second communication unit 22 closes the STUN channel and the document 1 channel that are not selected (step S503). Specifically, packets waiting at ports that are designated for the second data processing apparatus 2c, for the STUN channel and the document 1 channel, are ended. Thereafter, the first communication unit 13 and the second communication unit 22 begin P2P communication using the UPnP channel (step S504).

As described above, according to the communication system of this embodiment, in a case wherein two or more P2P communication channels are established between the first data processing apparatus 1 c and the second data processing apparatus 2c, the individual data processing apparatuses can select a channel to be used for P2P communication between the apparatuses, and can perform P2P communication using the selected channel. Therefore, a process required for the exchange of the selection results, by the data processing apparatuses, is reduced. Furthermore, since the same algorithm is employed by the individual data processing apparatus to perform the selection, the occurrence of a phenomenon that the obtained selection results differ, between the first data processing apparatus 1 c and the second data processing apparatus 2c, can be avoided.

### (Fourth Embodiment)

A first data processing apparatus, a second data processing apparatus, a server and a communication system according to a fourth embodiment of the present invention will now be described while referring to the drawings. The communication system of this embodiment permits a server to select a P2P communication channel.

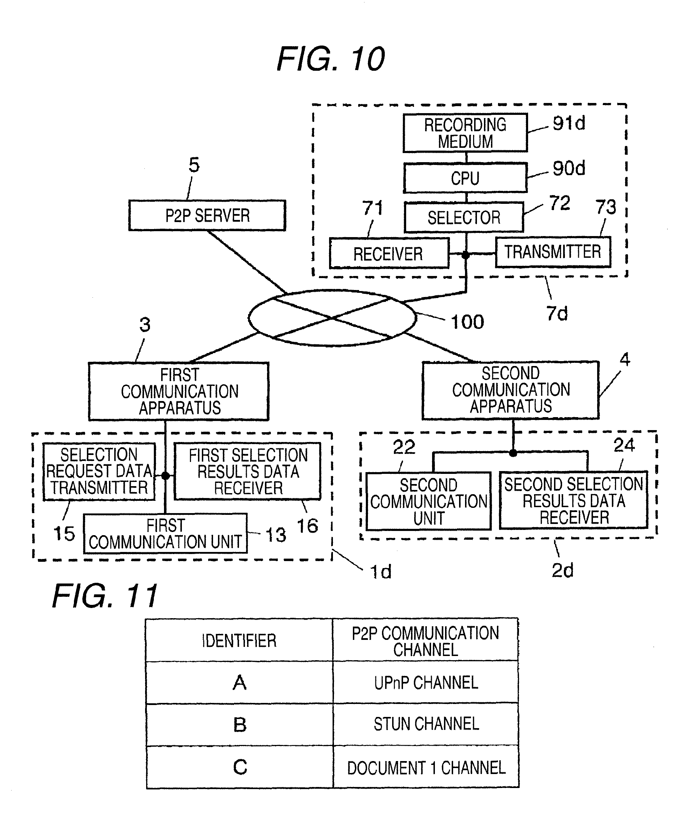

Fig. 10 is a block diagram showing the configuration of the first data processing apparatus, the second data processing apparatus, the server and the communication system of this embodiment. In Fig. 10, the communication system for this embodiment includes a first data processing apparatus 1d, a second data processing apparatus 2d, a first communication processing apparatus 3, a second communication processing apparatus 4, a P2P server 5 and a server 7d. It should be noted that components other than the first data processing apparatus 1 d, the second data processing apparatus 2d and the server 7d are the same as those in the first embodiment, and no explanation for them will be given.

The first data processing apparatus 1d includes a first communication unit 13, a selection request data transmitter 15 and a first selection results data receiver 16. It should be noted that the first communication unit 13 is the same as that of the first embodiment, except that communication with the second data processing apparatus 2d is performed along a channel selected by the server 7d by employing the selection results data received by the first selection results data receiver 16. Thus, no further explanation will be given.

The selection request data transmitter 15 transmits selection request data to the server 7d. Here, the selection request data is information for requesting that a channel to be used for communication, between the first data processing apparatus 1 d and the second data processing apparatus 2d, should be selected from among two or more P2P communication channels that are established, between the first data processing apparatus 1 d and the second data processing apparatus 2d. The selection request data may include a P2P communication channel candidate to be selected, or may not include such a P2P communication channel candidate.

Specifically, as in the former case, P2P communication channel candidate "UPnP channel" or "STUN channel" may be included in the selection request data. As in the latter case, an instruction indicating that one of A, B and C should be selected may be included in the selection request data, and as shown in Fig. 11, correlations of A, B and C with P2P communication channels may be stored in the first data processing apparatus 1d and the second data processing apparatus 2d. Fig. 11 is a diagram showing example correlations, for this embodiment, between identifiers and P2P communication channels.

Further, the selection request data includes information that can specify the destination for transmission of the selection results data. The information that can specify the destination for transmission of the selection results data may be, for example, the address and the port number of a data processing apparatus, and strictly speaking, the address and the port number of a communication processing apparatus. Or, in a case wherein the server 7d includes a correlation of apparatus identification data, the IP address and the port number of a data processing apparatus, the information may be the apparatus identification data for the data processing apparatus, i.e., so long as a transmission destination can be specified, any information can be employed.

It should be noted that the selection request data transmitter 15 may include a transmission device, such as a modem or a network card, that is used for transmission, or may not include such a device. In this case, although not shown, a transmission device is present between the selection request data transmitter 15 and the first communication processing apparatus 3. Further, the selection request data transmitter 15 may be provided by hardware, or by software, such as a driver that drives a transmission device.

The first selection results data receiver 16 receives selection results data. Here, the selection results data include information indicating selection results obtained by the server 7d. It should be noted that the selection results data includes information with which a data processing apparatus can specify a selected P2P communication channel. So long as a selected P2P communication channel can be specified, any information can be employed for this information, as well as in the first embodiment.

It should be noted that the first selection results data receiver 16 may include a reception device, such as a modem or a network card, that is used for reception, or may not include such a device. In this case, although not shown, a reception device is present between the first selection results data receiver 16 and the first communication processing apparatus 3. Further, the first selection results data receiver 16 may be provided by hardware, or by software, such as a driver that drives a reception device.

In a case wherein the selection request data transmitter 15 and the first selection results data receiver 16 include devices concerning communication, these may be the same means, or different means. The second data processing apparatus 2d includes a second communication unit 22 and a second selection results data receiver 24. It should be noted that since the second communication unit 22 is the same as that for the first embodiment, no further explanation will be given. Furthermore, the second selection results data receiver 24 is the same as the selection results data receiver 21 in the first embodiment, except for receiving the selection results data transmitted by the server 7d. Thus, no further explanation will be given.

The server 7d includes a receiver 71, a selector 72, a transmitter 73, a CPU 90d and a recording medium 91 d. The receiver 71 receives selection request data. The selection request data is data transmitted by the first data processing apparatus 1d. It should be noted that the receiver 71 may include a reception device, such as a modem or a network card, that is used for reception, or may not include such a device. In this case, although not shown, a reception device is present between the receiver 71 and a communication line 100. Further, the receiver 71 may be provided by hardware, or by software, such as a driver that drives a reception device.

From among two or more P2P communication channels that are established between the first data processing apparatus 1d and the second data processing apparatus 2d according to the selection request data received by the receiver 71, the selector 72 selects a channel to be used for communication between the first data processing apparatus 1d and the second data processing apparatus 2d, and outputs the results to the transmitter 73. The same algorithm as that used by the selector 11 in the first embodiment is employed for this selection. Here, in a case wherein the selector 72 performs selection by employing, for example, the port number of the first communication apparatus 3, etc., the port number or the like may be included in the selection request data, or the server 7d may obtain the port number from the P2P server 5 or by using another method. The CPU 90d controls the selector 72 based on a program stored on the recording medium 91d.

The transmitter 73 transmits the selection results data to the first data processing apparatus 1 d and the second data processing apparatus 2d. Here, the selection results data comprises information indicating selection results obtained by the selector 72. It should be noted that the transmitter 73 may include a transmission device, such as a modem or a network card, that is used for transmission, or may not include such a device. In this case, although not shown, a transmission device is present between the transmitter 73 and the communication line 100. Further, the transmitter 73 may be provided by hardware, or by software, such as a driver that drives a transmission device. In a case wherein the receiver 71 and the transmitter 73 include devices concerning communication, these may be the same means, or different means.

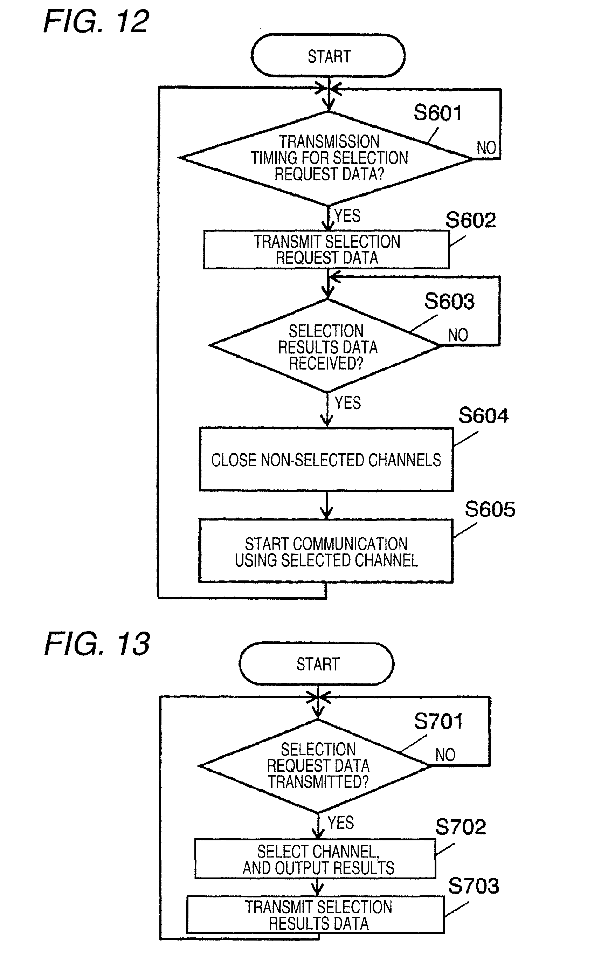

The operation of the first data processing apparatus 1d for this embodiment will now be described by using the flowchart in Fig. 12.

The selection request data transmitter 15 determines whether a timing for transmission of selection request data has been reached (step S601). And in a case wherein a timing for transmission of selection request has been reached, program control advances to step S602. In a case wherein the timing has not been reached, the process at step S601 is repeated until a timing for transmission of selection request data has been reached. Here, the timing for transmission of selection request data may, for example, be a timing at which the first communication unit 13 has established a plurality of P2P communication channels, or may be timing after the first communication unit 13 has established a plurality of P2P communication channels, and it has been determined that all the channels planned have been enabled and will be established, or may be another timing.

The selection request data transmitter 15 forms selection request data, and transmits the selection request data to the server 7d (step S602). It is assumed that the address of the server 7d, which is a destination for transmission of selection request data, has been designated in advance for the selection request data transmitter 15.

The first selection results data receiver 16 determines whether the selection results data have been received (step S603). And in a case wherein the selection results data have been received, program control advances to step S604, or in a case wherein the data have not been received, the process at step S603 is repeated until the selection results data have been received. In a case wherein selection results data have not been received after a predetermined period (e.g., one minute, etc.) has elapsed since the transmission of the selection request data, it is assumed that an error has occurred, e.g., the server 7d is not appropriately operated. Thus, a time-out for the process may be determined, and program control may be returned to step S601, or the processing sequence may be terminated.

The first communication unit 13 employs the selection results data, received by the first selection results data receiver 16, and closes P2P communication channels that have not been selected by the server 7d (step S604).

The first communication unit 13 employs the selection results data, and starts communication with the second data processing apparatus 2d using the channel selected by the server 7d (step S605). And program control returns to step S601. It should be noted that communication may be started after the first data processing apparatus 1d has received information indicating that the start of communication is permitted, that was transmitted by the second data processing apparatus 2d in response to the reception of the selection results data. Further, P2P communication started at step S605 may be ended when the transmission/reception of all data for communication has been completed, or when, for example, the power for the first data processing apparatus 1 d or the second data processing apparatus 2d is turned off, or when the first data processing apparatus 1d or the second data processing apparatus 2d accepts an instruction to terminate communication.

It should be noted that the processing in the flowchart in Fig. 12 is terminated by turning power off, or by a process end interrupt. Further, the operation of the second data processing apparatus 2d is the same as that in the flowchart in Fig. 3 for the first embodiment, except that the selection results data receiver 21 is replaced with the second selection results data receiver 24, and the second selection results data receiver 24 receives the selection results data that is transmitted by the server 7d. Thus, no further explanation will be given.

The operation of the server 7d in this embodiment will be described by employing the flowchart in Fig. 13. The receiver 71 determines whether selection request data has been received (step S701). In a case wherein the selection request data has been received, program control advances to step S702, and in a case wherein the data has not been received, the process at step S701 is repeated until the data is received. The selector 72 selects, from a plurality of P2P communication channels, a channel to be used for communication between data processing apparatuses, and outputs the results to the transmitter 73 (step S702). The above described algorithm, for example, is employed for the selection.

The transmitter 73 forms selection results data comprising information indicating selection results obtained by the selector 72, and transmits the selection results data to the first data processing apparatus 1d and the second data processing apparatus 2d (step S703). Based on the address, for the transmission source of the selection request data, that is included in the header of the selection request data, or the information that is included in the selection request data for specifying the transmission destination of the selection results data, the transmitter 73 can obtain the address of the transmission destination for the selection results data. It should be noted that, in the flowchart in Fig. 13, the processing is terminated by turning the power off or by a process end interrupt.

The operation of the communication system in this embodiment will now be described by employing a specific example. Assume that, for the server 7d, the first data processing apparatus 1 d and the second data processing apparatus 2d perform the same processes as steps S301 and S303 in the first embodiment. And assume that, as a result, information shown in Fig. 5 that correlates the apparatus identification information, the IP address and the port number are stored in the server 7d. Additionally, assume that the first data processing apparatus 1d and the second data processing apparatus 2d transmit a repeated packet to the server 7d, so that information can be received from the server 6.

Further, suppose that the selector 72 performs the selection of a channel in the order a STUN channel, a document 1 channel, a UPnP channel and another channel. That is, in a case wherein a STUN channel is included among P2P communication channels established between data processing apparatuses, the STUN channel is selected. Furthermore, in a case wherein a STUN channel is not included and a document 1 channel is included, the document 1 channel is selected. In a case wherein neither a STUN channel nor a document 1 channel is included, and a UPnP channel is included, the UPnP channel is selected. Also assume that three P2P communication channels, i.e., the UPnP channel, the STUN channel and the document 1 channel are established between the first data processing apparatus 1 d and the second data processing apparatus 2d.

When the selection request data transmitter 15 detects that three P2P communication channels have been established by the first communication unit 13, the transmitter 15 determines that a timing for performing selection has been reached (step S601). And selection request data is formed, which includes: an instruction that indicates the selection of one of a STUN channel, a document 1 channel and a UPnP channel; and an instruction to transmit selection results data to data processing apparatuses that are identified using apparatus identification data "AAA" and "BBB". Then, the selection request data is transmitted to the server 7d (step S602).

The selection request data is received by the receiver 71 of the server 7d (step S701). Since a STUN channel is included in the P2P communication channels that are established between the data processing apparatuses, the selector 72 selects the STUN channel, and outputs, to the transmitter 73, information indicating that the STUN channel has been selected (step S702). The transmitter 73 obtains apparatus identification data "AAA" and "BBB" that are included in the selection request data received by the receiver 71, examines the information shown in Fig. 5, and obtains the IP address and the port number that are correlated with the apparatus identification data. Thereafter, the transmitter 73 forms selection results data indicating that the STUN channel has been selected, and transmits the selection results data to the IP address and the port number that are obtained (step S703).

The selection results data are received by the first selection results data receiver 16 of the first data processing apparatus 1 d and the second selection results data receiver 24 of the second data processing apparatus 2d (steps S603 and S201). And the first data processing apparatus 1d and the second data processing apparatus 2d close channels other than the STUN channel (steps S604 and S202), and perform P2P communication using the STUN channel (steps S605 and S203).

As described above, according to the communication system of this embodiment, in a case wherein two or more P2P communication channels are established between the first data processing apparatus 1d and the second data processing apparatus 2d, the server 7d selects a channel to be used for P2P communication between the apparatuses, and outputs the selection results, so that the selection results can be transmitted to the first data processing apparatus 1d and the second data processing apparatus 2d. As a result, the first data processing apparatus 1 d and the second data processing apparatus 2d can perform P2P communication using the selected channel.

### (Fifth Embodiment)

A first data processing apparatus, a second data processing apparatus, a server and a communication system according to a fifth embodiment of the present invention will now be described while referring to the drawings. In the communication system of this embodiment, the server selects a P2P communication channel, and one data processing apparatus transmits the selection results data to the other data processing apparatus.

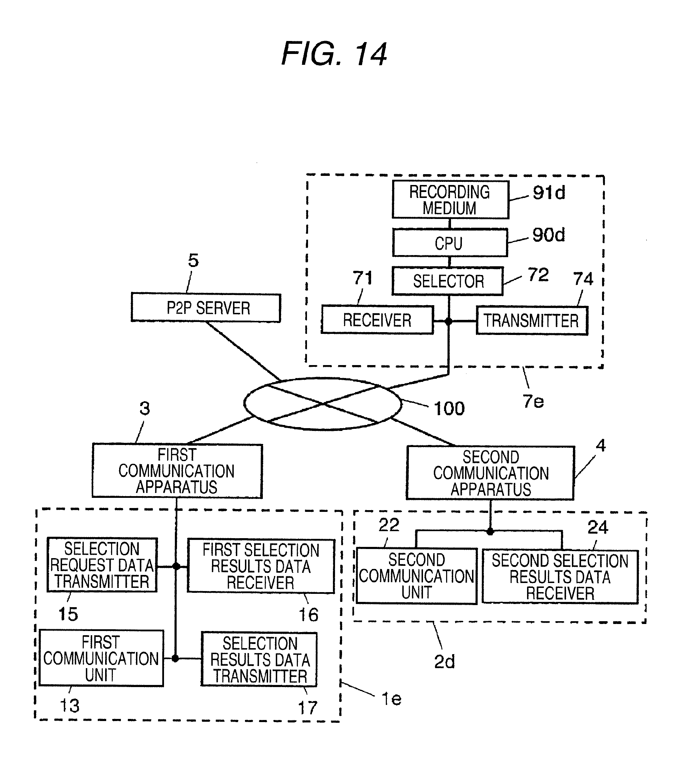

Fig. 14 is a block diagram showing the configuration for the first data processing apparatus, the second data processing apparatus, the server and the communication system of this embodiment. In Fig. 14, the communication system for this embodiment includes a first data processing apparatus 1 e, a second data processing apparatus 2d, a first communication processing apparatus 3, a second communication processing apparatus 4, a P2P server 5 and a server 7e. It should be noted that components other than the first data processing apparatus 1 e and the server 7e are the same as those in the fourth embodiment, and no explanation for them will be given. It is assumed, however, that the second selection results data receiver 24 of the second data processing apparatus 2d receives selection results data transmitted by the first data processing apparatus 1 e.

The first data processing apparatus 1e includes a first communication unit 13, a selection request data transmitter 15, a first selection results data receiver 16 and a selection results data transmitter 17. It should be noted that, since components other than the selection results data transmitter 17 are the same as those provided for the first data processing apparatus 1d of the first embodiment, no further explanation will be given.

The selection results data transmitter 17 transmits, to the second data processing apparatus 2d, selection results data received by the first selection results data receiver 16. This transmission is performed using a P2P communication channel. A channel selected by the server 7e, or a channel that has not been selected by the server 7e may be employed as a P2P communication channel for transmission of selection results data. It should be noted that the selection results data transmitted by the selection results data transmitter 17 may be exactly the same as those received by the first selection results data receiver 16, or that some information may be deleted from the selection results data or may be added thereto.

Further, the selection results data transmitter 17 may include a transmission device, such as a modem or a network card, that is used for transmission, or may not include such a device. In this case, although not shown, a transmission device is present between the selection results data transmitter 17 and the first communication processing apparatus 3. Further, the selection results data transmitter 17 may be provided by hardware, or by software, such as a driver that drives a transmission device.

According to this embodiment, since the server 7e transmits selection results data only to the first data processing apparatus 1e, the selection request data may not include the address and the port number of the second data processing apparatus 2d, which are information for the transmission of selection results data. In a case wherein, of the first communication unit 13, the selection request data transmitter 15, the first selection results data receiver 16 and the selection results data transmitter 17, two or more arbitrary components include devices related to communication, these may either be the same means, or different means.

The server 7e includes a receiver 71, a selector 72, a transmitter 74, a CPU 90d and a recording medium 91 d. It should be noted that, since components other than the transmitter 74 are the same as those of the server 7d of the fourth embodiment, no further explanation will be given. The transmitter 74 transmits selection results data to the first data processing apparatus 1 e. Since the transmitter 74 is the same as the transmitter 73 of the fourth embodiment, except for transmitting the selection results data only to the first data processing apparatus 1 e, no further explanation will be given. It should be noted that in a case wherein the receiver 71 and the transmitter 74 include devices related to communication, these may be either the same means, or different means.

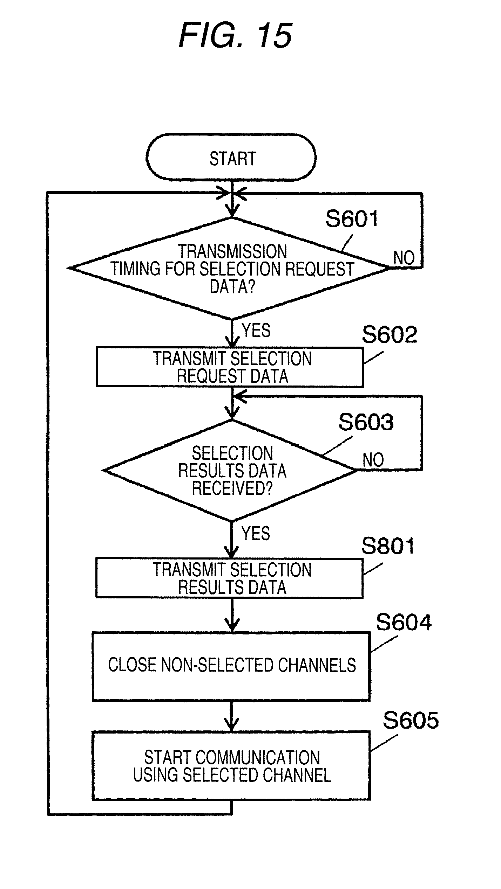

The operation of the first data processing apparatus 1e of this embodiment will now be described by employing the flowchart in Fig. 15. In the flowchart in Fig. 15, since processing other than step S801 is the same as in the flowchart in Fig. 12 for the fourth embodiment, no explanation for it will be given.

The selection results data transmitter 17 transmits, to the second data processing apparatus 2d, selection results data received by the first selection results data receiver 16 (step S801). The selection results data transmitter 17 obtains the address of the second data processing apparatus 2d, which is the destination for transmission of the selection results data by for example, the first communication unit 13. It should be noted that the operation of the second data processing apparatus 2d is the same as that in the flowchart in Fig. 3 for the first embodiment, except that the selection results data receiver 21 is replaced with the second selection results data receiver 24, and that the second selection results data receiver 24 receives selection results data transmitted by the first data processing apparatus 1 e. Thus, no further explanation will be given.

Further, since the operation of the server 7e is the same as that in the flowchart in Fig. 13 for the fourth embodiment, except that the transmitter 73 is replaced with the transmitter 74, and that the transmitter 74 transmits the selection results data only to the first data processing apparatus 1 e, no further explanation will be given.

Furthermore, the operation of the communication system in this embodiment is the same as that for the fourth embodiment, except that the first data processing apparatus 1 e transmits the selection results data to the second data processing apparatus 2d. Also, the processing for transmitting the selection results data from one data processing apparatus to the other data processing apparatus has already been described in the first embodiment. Therefore, since a specific example for the operation of the communication system of this embodiment is the same as in the first or the fourth embodiment, no further explanation will be given.

As described above, according to the communication system of this embodiment, in a case wherein two or more P2P communication channels are established between the first data processing apparatus 1e and the second data processing apparatus 2d, the server 7d selects one of the channels and outputs the selection results, which are transmitted to the first data processing apparatus 1 e. Further, the first data processing apparatus 1e transmits the received selection results to the second data processing apparatus 2d. As a result, the first data processing apparatus 1e and the second data processing apparatus 2d can perform P2P communication using the selected channel.

### (Sixth Embodiment)

A first data processing apparatus, a second data processing apparatus, a first server and a communication system according to a sixth embodiment of the present invention will now be described while referring to the drawings. In the communication system of this embodiment, the server selects a P2P communication channel, and one data processing apparatus transmits the selection results data to the other data processing apparatus via the server.

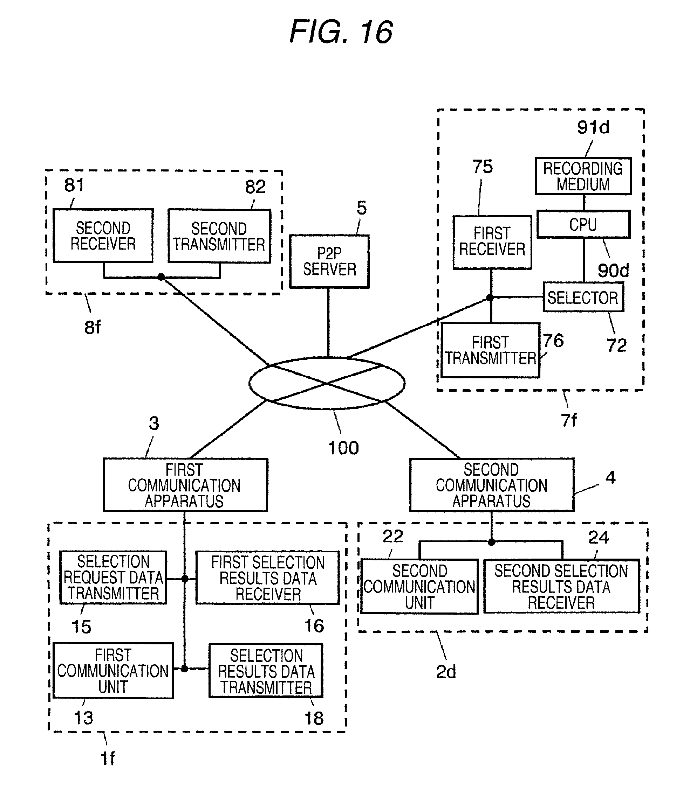

Fig. 16 is a block diagram showing the configuration for the first data processing apparatus, the second data processing apparatus, the first server and the communication system of this embodiment. In Fig. 16, the communication system for this embodiment includes a first data processing apparatus 1f, a second data processing apparatus 2d, a first communication processing apparatus 3, a second communication processing apparatus 4, a P2P server 5, a first server 7f and a second server 8f. It should be noted that components other than the first data processing apparatus 1f, the first server 7f and the second server 8f are the same as those in the fifth embodiment, and no explanation for them will be given. It is assumed, however, that the second selection results data receiver 24 of the second data processing apparatus 2d receives selection results data transmitted by the second server 8f.

The first data processing apparatus 1f includes a first communication unit 13, a selection request data transmitter 15, a first selection results data receiver 16 and a selection results data transmitter 18. It should be noted that since components other than the selection results data transmitter 18 are the same as those provided for the first data processing apparatus 1 e of the fifth embodiment, no further explanation will be given. Further, since the selection results data transmitter 18 is the same as the selection results data transmitter 17 of the fifth embodiment, except for transmitting the selection results data to the second server 8f, no further explanation will be given. It should be noted, however, that as explained in the second embodiment, the selection results data transmitted by the selection results data transmitter 18 includes not only information that can specify a P2P communication channel that is selected, but also information that can specify a destination for transmission of the selection results data.

As described above, the selection results data transmitted by the selection results data transmitter 18 may be formed by adding specific information, such as information that can specify a transmission destination for the selection results data, to the selection results data that is received by the first selection data receiver 16. Or, the selection results data transmitted by the selection results data transmitter 18 may be formed by deleting specific information from the selection results information that is received by the first selection results data receiver 16.

In a case wherein, of the first communication unit 13, the selection request data transmitter 15, the first selection results data receiver 16 and the selection results data transmitter 18, two or more arbitrary components include devices related to communication, these may be either the same means, or different means. The first server 7f includes a selector 72, a first receiver 75, a first transmitter 76, a CPU 90d and a recording medium 91 d. Here, since the selector 72, the first receiver 75, the first transmitter 76, the CPU 90d and the recording medium 91d are the same as the selector 72, the receiver 71, the transmitter 74, the CPU 90d and the recording medium 91d of the fifth embodiment, no further explanation for them will be given.

It should be noted that in a case wherein the first receiver 75 and the first transmitter 76 include devices related to communication, these may be the same means, or different means. The second server 8f includes a second receiver 81 and a second transmitter 82. Here, since the second receiver 81 and the second transmitter 82 are the same as the receiver 61 and the transmitter 62 of the second embodiment, no further explanation for them will be given. It should be noted that, in a case wherein the second receiver 81 and the second transmitter 82 include devices related to communication, these may be the same means, or different means.

Further, the operation of the first data processing apparatus 1f of this embodiment is the same as that in the flowchart in Fig. 15 for the fifth embodiment, except that the second server 8f is the transmission destination for selection results data, and that selection results data include information that can specify the transmission destination for the selection results data. Thus, no further explanation will be given. In addition, the operation of the second data processing apparatus 2d of this embodiment is the same as that shown in the flowchart in Fig. 3 for the first embodiment, except that the selection results data receiver 21 is replaced with the second selection results data receiver 24, and that the second selection results data receiver 24 receives selection results data transmitted by the second server 8f. Thus, no further explanation will be given.

Moreover, the operation of the first server 7f of this embodiment is the same as that in the flowchart in Fig. 13 for the fourth embodiment, except that the selector 72, the receiver 71 and the transmitter 74 are replaced respectively with the selector 72, the first receiver 75 and the first transmitter 76, and that the first transmitter 76 transmits selection results data only to the first data processing apparatus 1f. Therefore, no further explanation will be given. Also, since the operation of the second server 8f of this embodiment is the same as that in the flowchart in Fig. 7 of the second embodiment, except that the receiver 61 and the transmitter 62 are replaced with the second receiver 81 and the second transmitter 82, no further explanation will be given.

And the operation of the communication system of this embodiment is the same as that of the fifth embodiment, except that the first data processing apparatus 1 transmits selection results data to the second data processing apparatus 2d via the second server 8f. Further, the processing for transmitting selection results data from one data processing apparatus to the other processing apparatus via a server has been described in the second embodiment. Therefore, a specific example for the operation of the communication system of this embodiment is the same as that provided in the second or the fifth embodiment, and no further explanation for it will be given.

As described above, according to the communication system of this embodiment, in a case wherein two or more P2P communication channels are established between the first data processing apparatus 1f and the second data processing apparatus 2d, the server 7d selects a channel to be used for P2P communication between the apparatuses, and outputs the selection results, which are then transmitted to the first data processing apparatus 1 e. Furthermore, the first data processing apparatus 1f transmits the received selection results to the second data processing apparatus 2d via the second server 8f. As a result, the first data processing apparatus 1f and the second data processing apparatus 2d can perform P2P communication using the selected channel.

### (Seventh Embodiment)

A first data processing apparatus, a second data processing apparatus, a server and a communication system according to a seventh embodiment of the present invention will now be described while referring to the drawings. In the communication system of this embodiment, the server selects a P2P communication channel, and one data processing apparatus transmits the selection results data to the other data processing apparatus.

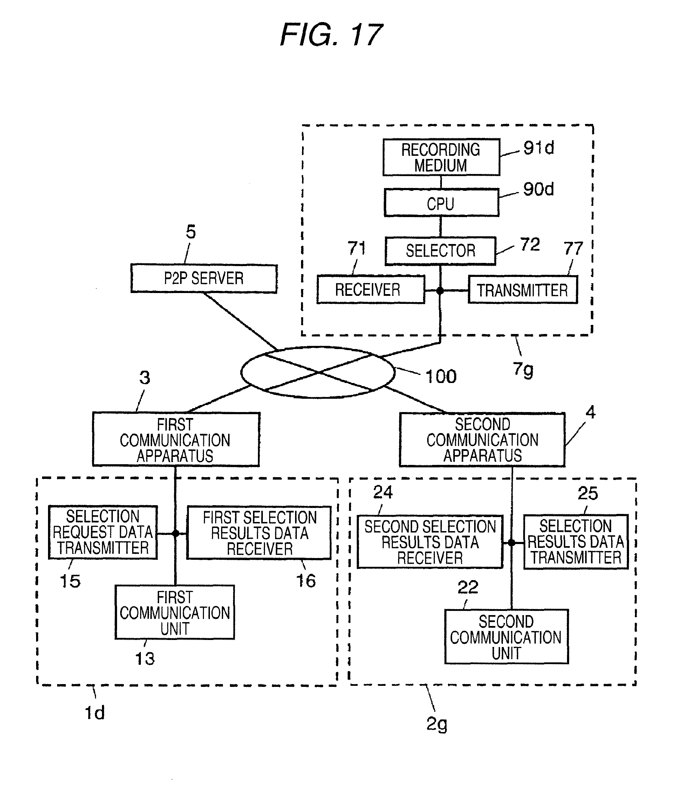

Fig. 17 is a block diagram showing the configuration of the first data processing apparatus, the second data processing apparatus, the server and the communication system of this embodiment. In Fig. 17, the communication system for this embodiment includes a first data processing apparatus 1 d, a second data processing apparatus 2g, a first communication processing apparatus 3, a second communication processing apparatus 4, a P2P server 5 and a server 7g. It should be noted that components other than the second data processing apparatus 2g and the server 7g are the same as those in the fourth embodiment, and no explanation for them will be given. It is assumed, however, that the first selection results data receiver 16 of the first data processing apparatus 1d receives selection results data transmitted by the second data processing apparatus 2g.

In this case, in this embodiment, since the server 7g transmits selection results data only to the second data processing apparatus 2g, selection request data may not include the address and the port number of the first data processing apparatus 1 d, which are information for the transmission of selection results data.

The second data processing apparatus 2g includes a second communication unit 22, a second selection request data transmitter 24 and a selection results data transmitter 25. It should be noted that since components other than the selection results data transmitter 25 are the same as those provided for the second data processing apparatus 2d of the fourth embodiment, no further explanation will be given.

The selection results data transmitter 25 transmits, to the first data processing apparatus 1 d, selection results data received by the second selection results data receiver 24. This transmission is performed using a P2P communication channel. A channel selected by the server 7g, or a channel that is not selected by the server 7g may be employed as the P2P communication channel for the transmission of selection results data. It should be noted that the selection results data transmitted by the selection results data transmitter 25 may be exactly the same as those received by the second selection results data receiver 24, or some information may be deleted from the selection results data or may be added thereto.

Further, the selection results data transmitter 25 may include a transmission device, such as a modem or a network card, that is used for transmission, or may not include such a device. In this case, although not shown, a transmission device is present between the selection results data transmitter 25 and the second communication processing apparatus 4. Further, the selection results data transmitter 25 may be provided by hardware, or by software, such as a driver that drives a transmission device. Also, in a case wherein, of the second communication unit 22, the second selection results data receiver 24 and the selection results data transmitter 25, two or more arbitrary components include devices related to communication, these may be either the same means, or different means.

The server 7g includes a receiver 71, a selector 72, a transmitter 77, a CPU 90d and a recording medium 91 d. It should be noted that since components other than the transmitter 77 are the same as those of the server 7d of the fourth embodiment, no further explanation will be given. The transmitter 77 transmits selection results data to the second data processing apparatus 2g. Since the transmitter 77 is the same as the transmitter 73 of the fourth embodiment, except for transmitting the selection results data only to the second data processing apparatus 2g, no further explanation will be given. It should be noted that, in a case wherein the receiver 71 and the transmitter 77 include devices related to communication, these may be either the same means, or different means.

Furthermore, since the operation of the first data processing apparatus 1d is the same as that for the fifth embodiment, except that the first selection results data receiver 16 receives selection results data transmitted by the second data processing apparatus 2g, no further explanation will be given.

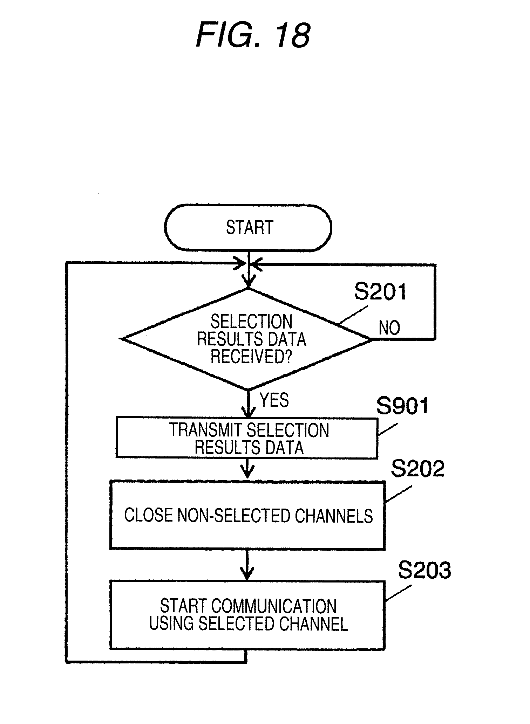

The operation of the second data processing apparatus 2g of this embodiment will now be described by employing the flowchart in Fig. 18. In the flowchart in Fig. 18, since processing other than step S901 is the same as in the flowchart in Fig. 3 for the first embodiment, no explanation for it will be given. It should be noted that the selection results data receiver 21 is replaced with the second selection results data receiver 24.

The selection results data transmitter 25 transmits, to the first data processing apparatus 1 d, selection results data received by the second selection results data receiver 24 (step S901). The selection results data transmitter 25 obtains the address of the first data processing apparatus 1 d, which is the destination for transmission of the selection results data, from, for example, the second communication unit 22. It should be noted that the operation of the server 7g is the same as that in the flowchart in Fig. 13 for the fourth embodiment, except that the transmitter 73 is replaced with the transmitter 77, and that the transmitter 77 transmits the selection results data only to the second data processing apparatus 2g. Thus, no further explanation will be given.

Furthermore, the operation of the communication system of this embodiment is the same as that of the fourth embodiment, except that the server 7g transmits selection results data only to the second data processing apparatus 2g, and that the second data processing apparatus 2g transmits the selection results data to the first data processing apparatus 1 d. Also, the processing for transmitting the selection results data from one data processing apparatus to the other data processing apparatus has already been described in the first embodiment. Therefore, since a specific example for the operation of the communication system of this embodiment is the same as in the first or the fourth embodiment, no further explanation will be given.

As described above, according to the communication system of this embodiment, in a case wherein two or more P2P communication channels are established between the first data processing apparatus 1d and the second data processing apparatus 2g, the server 7g selects one of the channels using the P2P communication between their apparatuses and outputs the selection results, which are transmitted to the second data processing apparatus 2g. Further, the second data processing apparatus 2g transmits the received selection results to the first data processing apparatus 1 d. As a result, the first data processing apparatus 1 d and the second data processing apparatus 2g can perform P2P communication using the selected channel.

### (Eighth Embodiment)

A first data processing apparatus, a second data processing apparatus, a first server and a communication system according to an eighth embodiment of the present invention will now be described while referring to the drawings. In the communication system of this embodiment, the server selects a P2P communication channel, and one data processing apparatus transmits the selection results data to the other data processing apparatus via the server.

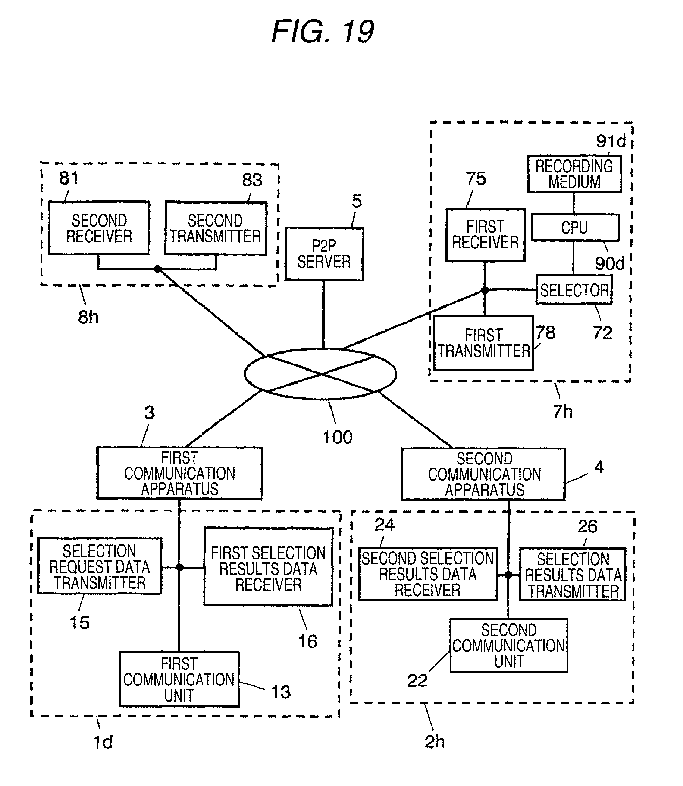

Fig. 19 is a block diagram showing the configuration of the first data processing apparatus, the second data processing apparatus, the first server and the communication system of this embodiment. In Fig. 19, the communication system for this embodiment includes a first data processing apparatus 1d, a second data processing apparatus 2h, a first communication processing apparatus 3, a second communication processing apparatus 4, a P2P server 5, a first server 7h and a second server 8h. It should be noted that components other than the second data processing apparatus 2h, the first server 7h and the second server 8h are the same as those in the seventh embodiment, and no explanation for them will be given. It is assumed, however, that the first selection results data receiver 16 of the first data processing apparatus 1d receives selection results data transmitted by the second server 8h.

The second data processing apparatus 2h includes a second communication unit 22, a second selection results data receiver 24 and a selection results data transmitter 26. It should be noted that since components other than the selection results data transmitter 26 are the same as those provided for the second data processing apparatus 2g of the seventh embodiment, no further explanation will be given. Further, since the selection results data transmitter 26 is the same as the selection results data transmitter 25 of the seventh embodiment, except for transmitting the selection results data to the second server 8h, no further explanation will be given.

It should be noted, however, that, as explained in the second embodiment, the selection results data transmitted by the selection results data transmitter 26 includes not only information that can specify a P2P communication channel that is selected, but also information that can specify a destination for the transmission of the selection results data. Furthermore, the selection results data transmitted by the selection results data transmitter 26 may be formed by adding specific information, such as information that can specify a transmission destination for the selection results data, to the selection results data that is received by the second selection data receiver 24. Or, the selection results data transmitted by the selection results data transmitter 26 may be formed by deleting specific information from the selection results information that is received by the second selection results data receiver 24.

In a case wherein, of the second communication unit 22, the second selection results data receiver 24 and the selection results data transmitter 25, two or more arbitrary components include devices related to communication, these may be either the same means, or different means.

The first server 7h includes a selector 72, a first receiver 75, a first transmitter 78, a CPU 90d and a recording medium 91d. Here, since the selector 72, the first receiver 75, the CPU 90d and the recording medium 91 d are the same as the selector 72, the receiver 71, the CPU 90d and the recording medium 91 d of the fourth embodiment, no further explanation for them will be given. Further, since the first transmitter 78 is the same as the transmitter 73 of the fourth embodiment, except for transmitting selection results data to the second data processing apparatus 2h, no further explanation will be given. It should be noted that in a case wherein the first receiver 75 and the first transmitter 78 include devices related to communication, these may be the same means, or different means.

The second server 8h includes a second receiver 81 and a second transmitter 83. Here, since the second receiver 81 is the same as that of the sixth embodiment, no further explanation for them will be given. Also, since the second transmitter 83 is the same as the second transmitter 82 of the sixth embodiment, except for transmitting, to the first data processing apparatus 1 d, selection results data received by the second receiver 81, no further explanation will be given. It should be noted that in a case wherein the second receiver 81 and the second transmitter 83 include devices related to communication, these may be the same means, or different means.

Further, since the operation of the first data processing apparatus 1 d of this embodiment is the same as that in the flowchart in Fig. 12 for the fourth embodiment, except for receiving selection results data that is transmitted by the second server 8h, no further explanation will be given. In addition, the operation of the second data processing apparatus 2h of this embodiment is the same as that shown in the flowchart in Fig. 18 for the seventh embodiment, except that the selection results data transmitter 25 is replaced with the selection results data transmitter 26, and that the selection results data transmitter 26 transmits selection results data to the second server 8h. Thus, no further explanation will be given. Moreover, the operation of the first server 7h of this embodiment is the same as that in the flowchart in Fig. 13 for the fourth embodiment, except that the selector 72, the receiver 71 and the transmitter 73 are replaced respectively with the selector 72, the first receiver 75 and the first transmitter 78, and that the first transmitter 78 transmits selection results data only to the second data processing apparatus 2h. Therefore, no further explanation will be given.

Also, since the operation of the second server 8h of this embodiment is the same as that in the flowchart in Fig. 7 for the second embodiment, except that the receiver 61 and the transmitter 62 are replaced with the second receiver 81 and the second transmitter 83, no further explanation will be given. And the operation of the communication system of this embodiment is the same as that for the seventh embodiment, except that the second data processing apparatus 2h transmits selection results data to the first data processing apparatus 1d via the second server 8h. Further, the processing for transmitting selection results data from one data processing apparatus to the other processing apparatus via a server has been described in the second and sixth embodiments. Therefore, a specific example for the operation of the communication system of this embodiment is the same as that provided in the second, the fifth or the sixth embodiment, and no further explanation for it will be given.

As described above, according to the communication system of this embodiment, in a case wherein two or more P2P communication channels are established between the first data processing apparatus 1d and the second data processing apparatus 2h, the first server 7h selects a channel to be used for P2P communication between the apparatuses, and outputs the selection results, which are then transmitted to the second data processing apparatus 2h. Furthermore, the second data processing apparatus 2h transmits the received selection results to the first data processing apparatus 1 d via the second server 8h. As a result, the first data processing apparatus 1d and the second data processing apparatus 2h can perform P2P communication using the selected channel.

### (Ninth Embodiment)

A first data processing apparatus, a second data processing apparatus, a server and a communication system according to a ninth embodiment of the present invention will now be described while referring to the drawings. In the communication system of this embodiment, the server selects a P2P communication channel, and the individual data processing apparatuses obtain the selection results by transmitting selection request data to the server.

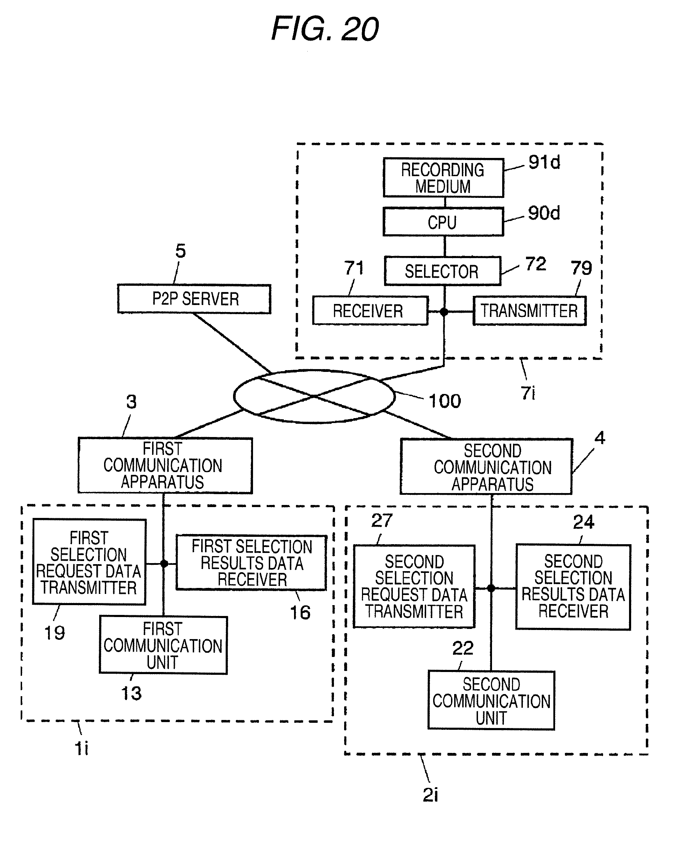

Fig. 20 is a block diagram showing the configuration of the first data processing apparatus, the second data processing apparatus, the server and the communication system of this embodiment. In Fig. 20, the communication system of this embodiment includes a first data processing apparatus 1i, a second data processing apparatus 2i, a first communication processing apparatus 3, a second communication processing apparatus 4, a P2P server 5 and a server 7i. It should be noted that components other than the first data processing apparatus 1i, i, the second data processing apparatus 2i and the server 7i are the same as those in the fourth embodiment, and no explanation for them will be given.

The first data processing apparatus 1 i includes: a first communication unit 13, a first selection results data receiver 16 and a first selection request data transmitter 19. It should be noted that the first communication unit 13, the first selection results data receiver 16 and the first selection request data transmitter 19 are the same as the first communication unit 13, the first selection results data receiver 16 and the selection request data transmitter 15 of the fourth embodiment, and no further explanation will be given. Further, in a case wherein, of the first communication unit 13, the first selection results data receiver 16 and the first selection results data transmitter 19, two or more arbitrary components include devices related to communication, these may be either the same means, or different means.

The second data processing apparatus 2i includes: a second communication unit 22, a second selection results data receiver 24 and a second selection request data transmitter 27. Since the second communication unit 22 and the second selection results data receiver 24 are the same as those in the fourth embodiment, no further explanation will be given. It should be noted, however, that the second selection results data receiver 24 receives selection results data transmitted in accordance with selection request data that was transmitted by the second selection request data transmitter 27.

The second selection request data transmitter 27 transmits selection request data to the server 7i. As well as selection request data transmitted by the first selection request data transmitter 19, the selection request data is information for requesting that a channel to be used for communication between the first data processing apparatus 1 i and the second data processing apparatus 2i should be selected from among two or more P2P communication channels that are established between the first data processing apparatus 1i and the second data processing apparatus 2i. The selection request data may include a P2P communication channel candidate to be selected, or may not include such a P2P communication channel candidate.

It should be noted that the second selection request data transmitter 27 may include a transmission device, such as a modem or a network card, that is used for transmission, or may not include such a device. In this case, although not shown, a transmission device is present between the second selection request data transmitter 27 and the second communication processing apparatus 4. Further, the second selection request data transmitter 27 may be provided by hardware, or by software, such as a driver that drives a transmission device. Also, in a case wherein, of the second communication unit 22, the second selection results data receiver 24 and the second selection results data transmitter 27, two or more arbitrary components include devices related to communication, these may be either the same means, or different means.

Here, as information that can specify a transmission destination for selection results data, simply, information related to the transmission source of selection request data may be included in the selection request data that is transmitted by the first selection request data transmitter 19 and the second selection request data transmitter 27. For example, the address and the port number of the first communication apparatus 3 may be simply included in the selection request data transmitted by the first selection request data transmitter 19. In a case wherein the first data processing apparatus 1i transmits the selection request data to the server 7i, the first communication processing apparatus 3 performs address conversion, and adds its address, etc., to the header of the selection request data. Therefore, the first selection request data transmitter 19 may not include, in the selection request data, the address, etc., of the first communication processing apparatus 3.

The server 7i includes a receiver 71, a selector 72, a transmitter 79, a CPU 90d and a recording medium 91 d. It should be noted that since the receiver 71, the selector 72, the CPU 90d and the recording medium 91d are the same as those of the fourth embodiment, no further explanation will be given. Further, since the transmitter 79 is the same as the transmitter 73 of the fourth embodiment, except for transmitting the selection results data to a data processing apparatus that transmitted the selection request data that the receiver 71 has received, no further explanation will be given. It should be noted that, in a case wherein the receiver 71 and the transmitter 79 include devices related to communication, these may be either the same means, or different means.

Also, since the operation of the first data processing apparatus 1 is the same as that in the flowchart in Fig. 12 for the fourth embodiment, no further explanation will be given. Moreover, since the operation of the second data processing apparatus 2i is the same as that of the first data processing apparatus 1i, no further explanation will be given. It should be noted that the second communication unit 22 corresponds to the first communication unit 13, the second selection results data receiver 24 corresponds to the first selection results data receiver 16 and the second selection request data transmitter 27 corresponds to the first selection request data transmitter 19. In addition, since the operation of the server 7i is the same as in the flowchart in Fig. 13 for the fourth embodiment, except that the transmitter 73 is replaced with the transmitter 79, and that the transmitter 79 transmits selection results data to the transmission source of selection request data, no further explanation will be given.

Also, in the operation of the communication system of this embodiment, the processing in which the first data processing apparatus 1i requests the transmission of selection results data, and performs P2P communication based on selection results data is performed in the same manner as in the fourth embodiment. Further, the processing in which the second data processing apparatus 2i requests the transmission of selection results data, and performs P2P communication based on selection results data is also performed in the same manner as for the first data processing 1i. Furthermore, the processing in which the server 7i transmits selection results data in accordance with selection request data is performed in the same manner as in the fourth embodiment. Therefore, a specific example for the operation of the communication system of this embodiment is the same as that of the fourth embodiment, and no further explanation for it will be given.

As described above, according to the communication system of this embodiment, in a case wherein two or more P2P communication channels are established between the first data processing apparatus 1 i and the second data processing apparatus 2i, the first data processing apparatus 1i and the second data processing apparatus 2i transmit selection request data to the server 7i. Then, in accordance with the selection request data, the server 7i selects a channel to be used for P2P communication between the apparatuses, and outputs the selection results. And selection results data indicating the selection results is transmitted to the transmission source of the selection request data. As a result, the first data processing apparatus 1i and the second data processing apparatus 2i can perform P2P communication using the selected channel. Also, the transmission of selection results data between the data processing apparatuses is not required.

Further, in the above individual embodiments, an explanation has been given for a case wherein the data processing apparatus selects a P2P communication channel, or receives selection results data, and thereafter, closes P2P communication channels that are not selected. However, channels that are not selected may not be closed.

Furthermore, in the above individual embodiments, an explanation has been given for a case wherein the first data processing apparatus and the second processing apparatus communicate with each other via communication processing apparatuses. However, either the first data processing apparatus or the second data processing apparatus may communicate without a communication processing apparatus. That is, either the first data processing apparatus or the second processing apparatus may employ a communication processing apparatus to communication. In addition, in a case wherein the first data processing apparatus or the second data processing apparatus employ a communication processing apparatus to communicate, the number of communication processing apparatuses may be one, or two or more.

Moreover, in the above individual embodiments, an explanation has been given, for example, for a case wherein a data processing apparatus selects a channel, a case wherein a server selects a channel, a case wherein one data processing apparatus transmits selection results data indicating selection results to the other data processing apparatus along a P2P communication channel, and a case wherein one data processing apparatus transmits selection results data indicating selection results to the other data processing apparatus along a server channel. The communication system of this invention need only select a channel to be used for communication between the first data processing apparatus and the second data processing apparatus in a case wherein two or more P2P communication channels are established between the two apparatuses, so that communication can be performed along the selected channel. And a place for selecting a channel, or a channel type used for the communication of selection results does not matter.

In addition, in the above individual embodiments, in a case wherein the communication system includes two or more servers, arbitrary servers of the two or more servers may be provided as the same server. For example, in the second embodiment, the P2P server 5 and the server 6 may be the same server, or in the sixth embodiment, the P2P server 5 and the first server 7f and the second server 8f may be the same server. Furthermore, in the above individual embodiments, an explanation has been given for a case wherein the first communication unit 13 and the second communication unit 22 perform the processing to establish P2P communication between the data processing apparatuses. However, a component other than the first communication unit 13 and the second communication unit 22 may perform the processing for establishing P2P communication between the data processing apparatuses.

Further, in the above individual embodiments, an explanation has been given for a case wherein P2P communication channels are a STUN channel, a UPnP channel and a document 1 channel. However, so long as channels are for P2P communication, the channels are not limited to those. And an arbitrary method may be employed to establish P2P communication channels. Also, two or more methods may be employed to establish two or more P2P communication channels between the data processing apparatuses, or one method may be employed two times or more.

Moreover, an explanation has been given for a case wherein the data processing apparatuses transmit selection results data via the server. However, the server may include two or more servers. For example, like a SIP proxy server, the server 6 in the second embodiment may include two or more servers.

In addition, an explanation has been given for a case wherein selection results data, which is transmitted between the data processing apparatuses via the server, includes information that can specify the transmission destination of the selection results data. However, the selection results data may not include information that can specify the transmission destination of the selection results data. For example, in a case wherein a server that relays selection results data includes sets of addresses of data processing apparatuses at transmission sources and data processing apparatuses at transmission destinations (strictly defined as the addresses of communication processing apparatuses), the server may obtain, from the header of a packet of selection results data, the address of the transmission source of selection results data; may obtain, from the sets of addresses that are stored, the address of the data processing apparatus at the transmission destination that is correlated with the source address; and may transmit the selection results data to the address of the data processing apparatus at the transmission destination.

Also, in the above individual embodiments, an explanation has been given for a case wherein selection request data includes information that indicates the transmission destination of selection results data. However, the selection request data may not include information that indicates the transmission destination of selection results data. For example, in a case wherein a predetermined data processing apparatus transmits selection request data to a server, and wherein the transmission destination of selection results data is registered in advance to the server, in consonance with the selection request data, the selection request data may not include information that indicates the transmission destination of the selection results data. Further, as in the ninth embodiment, in a case wherein selection results data consonant with selection request data is transmitted to the transmission source of the selection request data, the selection request data may not include information that indicates the transmission destination of the selection results data.

Furthermore, in the above individual embodiments, an explanation has been given for a case wherein the transmission of selection results data between the data processing apparatuses is a different process from P2P communication thereafter performed. However, these may be the same process. For example, a first packet transmitted in P2P communication may be selection results data, and may include selection results data, in addition to data for P2P communication, such as audio data or video data.

In addition, in the above individual embodiments, a case wherein selection results data are is transmitted has been described. However, the selection results may be output by an output unit. Here, this output may be provided by its display on a display device, such as a CRT or a liquid crystal display device, by transmission via a communication line to a predetermined apparatus, by printing it using a printer, by audio output through a loudspeaker, or by recording on a recording medium. It should be noted that this output unit may include a device, such as a display device or a printer, that performs output, or may not include such a device. And the output unit may be provided by hardware, or may be provided by software, such as a driver, etc., that drives these devices.

That is, a data processing apparatus of this invention may include: a selector that selects, from two or more P2P communication channels established between the first data processing apparatus and the second data processing apparatus, a channel to be used for communication between the first data processing apparatus and the second data processing apparatus; and an output unit that outputs the selection results obtained by the selector. Here, this data processing apparatus may be the first data processing apparatus or the second data processing apparatus, or the server or the first server in each embodiment. Here, in this case, for example, a user may examine the output selection results, and may manually designate a P2P communication channel to be used for the first data processing apparatus and the second data processing apparatus, so that P2P communication is performed between the first data processing apparatus and the second data processing apparatus.

Also, a data processing method employed by such a data processing apparatus is as follows. Specifically, the data processing method includes:
a selection step of selecting, from two or more peer-to-peer communication channels established between the first data processing apparatus and the second data processing apparatus, a channel to be used for communication between the first data processing apparatus and the second data processing apparatus; and
an output step of outputting selection results obtained at the selection step,
wherein at least either the first data processing apparatus or the second data processing apparatus communicates via a communication processing apparatus.

Moreover, in the above individual embodiments, the individual processes or the individual functions may be provided through integrated processing by a single apparatus or system, or through distributed processing by a plurality of apparatuses. Further, in the above individual embodiments, the individual components may be provided as special hardware, and components that can be obtained as software may be provided by performing a program.

For example, when a program execution unit, such as a CPU, reads and executes a software program recorded on a recording medium, such as a hard disk or a semiconductor memory, the individual components can be provided. It should be noted that the software that provides the apparatuses in the embodiments above are the following program. That is, this program permits a computer to perform:
a selection step of selecting, from two or more peer-to-peer communication channels established between the first data processing apparatus and the second data processing apparatus, a channel to be used for communication between the first data processing apparatus and the second data processing apparatus; and
an output step of outputting selection results obtained at the selection step,
wherein at least either the first data processing apparatus or the second data processing apparatus communicates via a communication processing apparatus.

Furthermore, in this program, a process performed by hardware, e.g., a process performed at a transmission step using only hardware, such as a modem or an interface card, is not included at the output step of outputting information. In addition, this program may be executed by being downloaded from a server, or by being read from a predetermined recording medium, such as an optical disk like a CD-ROM, a magnetic disk or a semiconductor memory, on which the program is recorded.

A single computer or a plurality of computers may be employed to perform this program. That is, the integrated processing or the distributed processing may be performed. Further, the present invention can be variously modified without being limited to the above described embodiments, and naturally, these modifications can also be included in the scope of the present invention.

According to the communication system, etc., of the present invention, in a case wherein two or more P2P communication channels are established between the data processing apparatuses, a channel to be used for communication between the apparatuses can be selected, and P2P communication can be performed using the selected channel.

### <Industrial Applicability>

As described above, according to the communication system of the present invention, in a case wherein two or more P2P communication channels are established between data processing apparatuses, P2P communication can be performed using a selected channel. Thus, this invention is useful for a communication system that performs P2P communication.

## Claims

1. A communication system that includes a first data processing apparatus and a second data processing apparatus, so that at the least, either the first data processing apparatus or the second data processing apparatus performs communication via a communication processing apparatus,
wherein, in a case wherein two or more peer-to-peer communication channels are established between the first data processing apparatus and the second data processing apparatus, at the least, either the first data processing apparatus, or the second data processing apparatus, selects a channel to be employed for communication between the first data processing apparatus and the second data processing apparatus, and communicates along the selected channel.

2. The communication system according to claim 1,
wherein the first data processing apparatus includes
a selector for selecting, from among the two or more peer-to-peer communication channels that have been established, a channel to be used for communication with the second data processing apparatus,
a first communication unit for communicating with the second data processing apparatus along the channel selected by the selector, and
a selection results data transmitter for transmitting, to the second data processing apparatus, selection results data that is information indicating selection results obtained by the selector; and
wherein the second data processing apparatus includes
a selection results data receiver for receiving the selection results data, and
a second communication unit for employing the selection results data received by the selection results data receiver, and communicating with the first data processing apparatus along the channel selected by the selector.

3. The communication system according to claim 1, wherein the first data processing apparatus includes
a first selector for selecting, from among the two or more peer-to-peer communication channels that have been established, a channel to be used for communication with the second data processing apparatus,
a first communication unit for communicating with the second data processing apparatus along the channel selected by the first selector; and
wherein the second data processing apparatus includes
a second selector for employing the same algorithm as used by the first selector, and selecting, from among the two or more peer-to-peer communication channels that have been established, a channel to be used for communication with the first data processing apparatus, and
a second communication unit for communicating with the first data processing apparatus along the channel selected by the second selector.

4. A communication system that includes a first data processing apparatus, a second processing apparatus and additional equipment, so that either the first data processing apparatus or the second data processing apparatus communicates via a communication apparatus,
wherein, in a case wherein two or more peer-to-peer communication channels are established between the first data processing apparatus and the second data processing apparatus, at the least, either the first data processing apparatus, the second data processing apparatus or the additional equipment selects a channel used for communication between the first data processing apparatus and the second data processing apparatus, so that communication can be performed along the selected channel.

5. The communication system according to claim 4,
wherein the additional equipment is a server, and the first data processing apparatus includes
a selector for selecting, from among the two or more
peer-to-peer communication channels that have been established, a channel to be used for communication with the second data processing apparatus,
a first communication unit for communicating with the second data processing apparatus along the channel selected by the selector, and
a selection results data transmitter for transmitting, to the server, selection results data, which is information indicating selection results obtained by the selector;
wherein the server includes
a receiver for receiving the selection results data, and
a transmitter for transmitting, to the second data processing apparatus, the selection results data received by the receiver; and
wherein the second data processing apparatus includes
a selection results data receiver for receiving the selection results data transmitted by the server, and
a second communication unit for employing the selection results data received by the selection results data receiver, and for communicating with the first data processing apparatus along the channel selected by the selector.

6. The communication system according to claim 4,
wherein the additional equipment is a server, and the first data processing apparatus includes
a selection request data transmitter for transmitting, to the
server, selection request data, which is information for requesting that a channel used to communicate with the second data processing apparatus be selected from among the two or more peer-to-peer communication channels that have been established,
a first selection results data receiver for receiving selection results data, which is information indicating selection results obtained by the server, and
a first communication unit for employing the selection results data received by the first selection results data receiver, and communicating with the second data processing apparatus along the channel selected by the server;
wherein the second data processing apparatus includes
a second selection results data receiver for receiving selection results data, and
a second communication unit for employing the selection results data received by the second selection results data receiver, and communicating with the first data processing apparatus along the channel selected by the server; and
wherein the server includes
a receiver for receiving the selection request data,
a selector for, in accordance with the selection request data, selecting, from among the two or more peer-to-peer communication channels that have been established, a channel to be used for communication between the first data processing apparatus and the second data processing apparatus, and
a transmitter for transmitting, to the first data processing apparatus and the second data processing apparatus, the selection results data, which is information indicating the selection results obtained by the selector.

7. The communication system according to claim 4,
wherein the additional equipment is a server, and the first data processing apparatus includes
a selection request data transmitter for transmitting, to the
server, selection request data, which is information for requesting that a channel to be used to communicate with the second data processing apparatus be selected from among the two or more peer-to-peer communication channels that have been established,
a first selection results data receiver for receiving selection results data, which is information indicating selection results obtained by the server,
a first communication unit for employing the selection results received by the first selection results data receiver, and communicating with the second data processing apparatus along the channel selected by the server, and
a selection results data transmitter for transmitting the selection results data to the second data processing apparatus;
wherein the second data processing apparatus includes
a second selection results data receiver for receiving the selection results data, and
a second communication unit for employing the selection results data received by the second selection results data receiver, and communicating with the first data processing apparatus along the channel selected by the server; and
wherein the server includes
a receiver for receiving the selection request data,
a selector for, in accordance with the selection request data, selecting, from among the two or more peer-to-peer communication channels that have been established, a channel to be used for communication between the first data processing apparatus and the second processing apparatus, and
a transmitter for transmitting, to the first data processing apparatus, the selection results data, which is information indicating the selection results obtained by the selector.

8. The communication system according to claim 4,
wherein the additional equipment includes a first server and a second server;
wherein the first data processing apparatus includes
a selection request information transmitter for transmitting, to
the first server, selection request data, which is information for requesting that a channel to be used for communication with the second data processing apparatus be selected from among the two or more peer-to-peer communication channels that have been established,
a first selection results data receiver for receiving selection results data, which is information indicating selection results obtained by the first server,
a first communication unit for employing the selection results data received by the first selection results data receiver, and communicating with the second data processing apparatus along the channel selected by the first server, and
a selection results data transmitter for transmitting the selection results data to the second server;
wherein the second data processing apparatus includes
a second selection results data receiver for receiving the selection results data transmitted by the second server, and
a second communication unit for employing the selection results data received by the second selection results data receiver, and communicating with the first data processing apparatus along the channel selected by the first server;
wherein the first server includes
a first receiver for receiving the selection request data,
a selector for, in accordance with the selection request information, selecting, from among the two or more peer-to-peer communication channels that have been established, a channel to be employed for communication between the first data processing apparatus and the second data processing apparatus, and
a first transmitter for transmitting, to the first data processing apparatus, the selection results data, which is information indicating the selection results obtained by the selector; and
wherein the second server includes
a second receiver for receiving the selection results data, and
a second transmitter for transmitting, to the second data processing apparatus, the selection results data received by the second receiver.

9. The communication system according to claim 4,
wherein the additional equipment is a server;
wherein the first data processing apparatus includes
a selection request data transmitter for transmitting, to the
server, selection request data, which is information for requesting that a channel to be used for communication with the second data processing apparatus be selected from among the two or more peer-to-peer communication channels that are established,
a first selection results data receiver for receiving the selection results data that is information transmitted by the second data processing apparatus, indicating selection results obtained by the server, and
a first communication unit for employing the selection results data received by the first selection results data receiver, and communicating with the second data processing apparatus along the channel selected by the server;
wherein the second data processing apparatus includes
a second selection results data receiver for receiving the selection results data transmitted by the server,
a second communication unit for employing the selection results data received by the second selection results data receiver, and communicating with the first data processing apparatus along the channel selected by the server, and
a selection results data transmitter for transmitting, to the first data processing apparatus, the selection results data received by the second selection results data receiver; and
wherein the server includes
a receiver for receiving the selection request data,
a selector for, in accordance with the selection request data, selecting, from among the two or more peer-to-peer communication channels that have been established, a channel to be used for communication between the first data processing apparatus and the second data processing apparatus, and
a transmitter for transmitting, to the second data processing apparatus, the selection results data, which is information indicating the selection results obtained by the selector.

10. The communication system according to claim 4,
wherein the additional equipment includes a first server and a second server;
wherein the first data processing apparatus includes
a selection request data transmitter for transmitting, to the first
server, selection request data, which is information for requesting that a channel to be used for communication with the second data processing apparatus be selected from among the two or more peer-to-peer communication channels that have been established,
a first selection results data receiver for receiving selection results data, which is information transmitted by the second server, indicating the selection results obtained by the first server, and
a first communication unit for employing the selection results data received by the first selection results data receiver, and communicating with the second data processing apparatus along the channel selected by the first server;
wherein the second data processing apparatus includes
a second selection results data receiver for receiving the selection results data transmitted by the first server,
a second communication unit for employing the selection results data received by the second selection results data receiver, and communicating with the first data processing apparatus along the channel selected by the first server, and
a selection results data transmitter for transmitting, to the second server, the selection results data received by the second selection results data receiver;
wherein the first server includes
a first receiver for receiving the selection results data,
a selector for, in accordance with the selection request data, selecting, from among the two or more peer-to-peer communication channels that have been established, a channel to be used for communication between the first data processing apparatus and the second data processing apparatus, and
a first transmitter for transmitting, to the second data processing apparatus, selection results data, which is information indicating selection results obtained by the selector; and
wherein the second server includes
a second receiver for receiving the selection results data, and
a second transmitter for transmitting, to the first data processing apparatus, the selection results data received by the second receiver.

11. The communication system according to claim 4,
wherein the additional equipment is a server, and the first data processing apparatus includes
a first selection request data transmitter for transmitting, to the server, selection request data that is information for requesting that a channel to be used for communication with the second data processing apparatus be selected from among the two or more peer-to-peer communication channels that have been established,
a first selection results data receiver for receiving selection results data, which is information indicating selection results obtained by the server, and
a first communication unit for employing the selection results data obtained by the first selection results data receiver, and communicating with the second data processing apparatus along the channel selected by the server;
wherein the second data processing apparatus includes
a second selection request data transmitter for transmitting the selection request data,
a second selection results data receiver for receiving the selection results data, and
a second communication unit for employing the selection results data received by the second selection results data receiver, and communicating with the first data processing apparatus along the channel selected by the server; and
wherein the server includes
a receiver for receiving the selection request data,
a selector for, in accordance with the selection request data, selecting, from among the two or more peer-to-peer communication channels that have been established, a channel to be used for communication between the first data processing apparatus and the second data processing apparatus, and
a transmitter for transmitting, to a data processing apparatus that transmitted the selection request data, the selection results data, which is information indicating the selection results obtained by the selector.

12. The communication system according to one of claims 2, 3 and 5 to 11, wherein, of the two or more peer-to-peer communication channels that have been established, channels that are not selected by the selector are closed.

13. A first data processing apparatus that is a constituent of a communication system according to one of claims 1 to 11.

14. A second data processing apparatus that is a constituent of a communication system according to one of claims 1 to 11.

15. A server that is a constituent of a communication system according to one of claims 5, 6, 7, 9 and 11.

16. A first server that is a constituent of a communication system according to claim 8 or 10.

17. A data processing method, for a communication system that includes a first data processing apparatus and a second data processing apparatus, so that at the least, either the first data processing apparatus or the second data processing apparatus performs communication via a communication processing apparatus,
wherein, in a case wherein two or more peer-to-peer communication channels are established between the first data processing apparatus and the second data processing apparatus, the data processing method, provided for at the least either the first data processing apparatus, or the second data processing apparatus, comprises:
a selection step of selecting a channel to be employed for communication between the first data processing apparatus and the second data processing apparatus, and communicates along the selected channel; and
an output step of outputting information for the channel selected at the selection step.

18. A data processing method, for a communication system that includes a first data processing apparatus, a second processing apparatus and additional equipment, so that either the first data processing apparatus or the second data processing apparatus communicates via a communication apparatus,
wherein, in a case wherein two or more peer-to-peer communication channels are established between the first data processing apparatus and the second data processing apparatus, the data processing method, provided for at the least, either the first data processing apparatus, the second data processing apparatus or the additional equipment, comprises:
a selection step of selecting a channel used for communication between the first data processing apparatus and the second data processing apparatus, so that communication can be performed along the selected channel; and
an output step of outputting information for the channel selected at the selection step.

19. A program, which permits a computer to perform data processing, for a communication system that includes a first data processing apparatus and a second data processing apparatus, so that at the least, either the first data processing apparatus or the second data processing apparatus performs communication via a communication processing apparatus,
wherein, in a case wherein two or more peer-to-peer communication channels are established between the first data processing apparatus and the second data processing apparatus, a data processing method, provided for at the least either the first data processing apparatus, or the second data processing apparatus, comprises:
a selection step of selecting a channel to be employed for communication between the first data processing apparatus and the second data processing apparatus, and communicating along the selected channel; and
an output step of outputting information for the channel selected at the selection step.

20. A program, which permits a computer to perform data processing, for a communication system that includes a first data processing apparatus, a second processing apparatus and additional equipment, so that either the first data processing apparatus or the second data processing apparatus communicates via a communication apparatus,
wherein, in a case wherein two or more peer-to-peer communication channels are established between the first data processing apparatus and the second data processing apparatus, a data processing method, provided for at the least, either the first data processing apparatus, the second data processing apparatus or the additional equipment, comprises:
a selection step of selecting a channel used for communication between the first data processing apparatus and the second data processing apparatus, so that communication can be performed along the selected channel; and
an output step of outputting information for the channel selected at the selection step.

21. A recording medium, for recording a program that permits a computer to perform data processing, for a communication system that includes a first data processing apparatus and a second data processing apparatus, so that at the least, either the first data processing apparatus or the second data processing apparatus performs communication via a communication processing apparatus,
wherein, in a case wherein two or more peer-to-peer communication channels are established between the first data processing apparatus and the second data processing apparatus, a data processing method, provided for at the least either the first data processing apparatus, or the second data processing apparatus, comprises:
a selection step of selecting a channel to be employed for communication between the first data processing apparatus and the second data processing apparatus, and communicating along the selected channel; and
an output step of outputting information for the channel selected at the selection step.

22. A recording medium, for recording a program that permits a computer to perform data processing, for a communication system that includes a first data processing apparatus, a second processing apparatus and additional equipment, so that either the first data processing apparatus or the second data processing apparatus communicates via a communication apparatus,
wherein, in a case wherein two or more peer-to-peer communication channels are established between the first data processing apparatus and the second data processing apparatus, the data processing method, provided for at the least, either the first data processing apparatus, the second data processing apparatus or the additional equipment, comprises:
a selection step of selecting a channel used for communication between the first data processing apparatus and the second data processing apparatus, so that communication can be performed along the selected channel; and
an output step of outputting information for the channel selected at the selection step.
